# EUROPÄISCHE PATENTSCHRIFT

(11) **EP 3 376 315 B1**
(45) Veröffentlichungstag und Bekanntmachung des Hinweises auf die Patenterteilung: **03.06.2020**
(21) Anmeldenummer: 18000246.1
(22) Anmeldetag: 12.03.2018
(51) Int. Cl.: F04B 49/20, F04D 15/00, F24D 19/10, G05B 19/04

(54) **KONFIGURATIONSVERFAHREN FÜR EIN DREHZAHLREGELBARES KREISELPUMPENAGGREGAT UND ZUGEHÖRIGER KONFIGURATIONSASSISTENT**
METHOD OF CONFIGURING A CENTRIFUGAL PUMP UNIT WITH VARIABLE ROTATIONAL SPEED AND ASSOCIATED CONFIGURATION ASSISTANT
PROCÉDÉ DE CONFIGURATION POUR UNE POMPE CIRCULAIRE À VITESSE DE ROTATION RÉGLABLE ET ASSISTANT DE CONFIGURATION ASSOCIÉ

(30) Priorität: 13.03.2017 DE 102017002342
(43) Veröffentlichungstag der Anmeldung: 19.09.2018
(73) Patentinhaber: WILO SE, 44263 Dortmund (DE)
(72) Erfinder: Schmied, Stephan, 59174 Kamen (DE); Eckardt, Nils, 44149 Dortmund (DE)
(74) Vertreter: Cohausz Hannig Borkowski Wißgott

(56) Entgegenhaltungen:
- WO-A1-2009/105797
- DE-A1-102012 104 214
- DE-A1-102014 003 249

## Beschreibung

Die Erfindung betrifft ein Konfigurationsverfahren für ein drehzahlregelbares Kreiselpumpenaggregat in einer hydraulischen Anlage, das bestimmungsgemäß für eine Vielzahl unterschiedlicher Anlagenarten einsetzbar und in einer Vielzahl verschiedener Regelungsarten mit einer entsprechenden Reglerkonfiguration betreibbar ist. Ferner betrifft die Erfindung einen Konfigurationsassistenten zur Ausführung des Verfahrens, ein Kreiselpumpenaggregat mit einem erfindungsgemäßen Konfigurationsassistenten sowie eine Anordnung aus einem Kreiselpumpenaggregat und einem mobilen Handgerät, wobei das Handgerät den erfindungsgemäßen Konfigurationsassistenten aufweist.

Moderne Kreiselpumpenaggregate sind häufig multifunktionsfähig. Sie können in unterschiedlichen Anlagen verschiedenster Arten wie z.B. Heizungs-, Kühlungs- oder Trinkwasseranlagen zur Warm- bzw. Kaltwasserwasserzirkulation, zur Speicherbeladung oder Druckerhöhung eingesetzt werden und bieten eine große Auswahl verschiedener Betriebsarten, insbesondere Regelungsarten an, um ihrem anlagenspezifischen Zweck gerecht zu werden. Weit verbreitet sind hier die Druckregelungen wie die Regelung auf konstanten Differenzdruck (Δp-c) oder die Regelung auf variablen Differenzdruck (Δp-v), insbesondere die Proportionaldruckregelung. Bekannt sind auch Temperaturregelverfahren wie eine Regelung auf eine konstante Zieltemperatur (cT) oder eine Regelung auf eine bestimmte Differenztemperatur (ΔT-c) wie sie beispielsweise bei Heizungsanlagen der Brennwerttechnik oder Anlagen mit Wärmetauscher oder hydraulischer Weiche eingesetzt werden. Eine andere Betriebsart ist beispielsweise der Betrieb mit konstanter Drehzahl. Zu beachten ist dabei, dass nicht jede Betriebsart für jede hydraulische Anlage geeignet oder gleich gut geeignet ist, so dass die Gefahr einer ungeeigneten Einstellung des Kreiselpumpenaggregats gegeben ist.

Darüber hinaus ist für eine korrekte Einstellung des Kreiselpumpenaggregats zumeist eine Kenntnis der physikalischen Regelungszusammenhänge einerseits, der Pumpeneinstellmöglichkeiten (HQ-Pumpenkennfeld) sowie der hydraulischen Anlagen, in der die Kreiselpumpe verbaut ist, andererseits nötig. Im Falle eines Pumpentauschs in einer bestehenden älteren Anlage ist es für den Installateur in der Praxis nicht möglich, nähere Informationen über die Anlagen zu erhalten. Aus diesen Gründen wird ein Kreiselpumpenaggregat häufig mit Werkseinstellungen betrieben, d.h. nicht an die Anlage angepasst.

Abhilfe schaffen hier automatische Regelungsverfahren, wie die von der WILO SE, Dortmund, Deutschland, entwickelten Dynamic Adapt® und Dynamic Adapt Plus, die die Leistung des Kreiselpumpenaggregats stets an den Bedarf der Anlage anpassen und in vielen verschiedenen Anlagenarten eingesetzt werden können. Gleichwohl bestehen Vorurteile und Misstrauen gegenüber solchen Regelungsarten, so dass seitens der Anwender immer auch die konventionellen Regelungsarten als Einstellmöglichkeit gewünscht sind.

Obgleich manche Fehleinstellungen schnell erkannt werden können, beispielsweise eine in der Leistung zu schwach eingestellte Pumpe anhand einer Unterversorgung von Verbrauchern, oder eine in der Leistung zu hoch eingestellte Pumpe anhand von starken Strömungsgeräuschen, so ist ein energetisch ineffizienter Betrieb meist nicht oder erst spät bemerkbar, wenn die Stromrechnung kommt. Wird dabei berücksichtigt, dass Kreiselpumpenaggregate beispielsweise in Heiz- oder Kühlanwendungen meist mehrere Monate ununterbrochen laufen, summieren sich dadurch erhebliche Kosten, die eigentlich hätten eingespart werden können.

Zusätzlich zu den verschiedenen Betriebsarten sind zahlreiche Zusatzeinstellungen bekannt und werden bei Pumpenaggregaten als Einstellmöglichkeit angeboten. Zu nennen sind hier beispielsweise die sogenannte Nachtabsenkung, bei der eine Heizungspumpe nachts aufgrund einer erkannten Absenkung der Vorlauftemperatur in einen Energiesparmodus geht, die Festlegung eines Maximalvolumenstroms (Q-Limit) oder die in Fachkreisen bekannte Funktion "No-Flow Stop", bei dem die Pumpe unterhalb eines Minimalförderstroms in einen intermittierenden Betrieb geht, bei dem sie eine Zeit lang abgeschaltet ist und kurzzeitig wieder in Betrieb geht, um zu prüfen, ob sie gebraucht wird. Auch hier ist zu beachten, dass nicht jede Sondereinstellung eine sinnvolle Ergänzung für jede der Betriebsarten bzw. für die jeweilige Anlage geeignet ist. Eine bestimmte Sonderfunktion kann auch aufgrund der hydraulischen Anlage nachteilig sein, so dass auch hier die Gefahr einer falschen Einstellung des Kreiselpumpenaggregats gegeben ist. Darüber hinaus ist auch bei den Sonderfunktionen ein Verständnis der jeweiligen Wirkungsweise nötig, um die entsprechende Sonderfunktion für die jeweilige Pumpenanwendung sinnvoll einzusetzen. Aus diesem Grund bleiben sinnvolle Sondereinstellungen häufig deaktiviert oder werden in Fällen aktiviert, in denen sie keinen Sinn machen. Dies kann beispielsweise die Aktivierung der Nachtabsenkungsfunktion in einer Kälteverteilung sein, die zwangsläufig zu Fehlfunktionen führen muss. Bei der Nahtabsenkungsfunktion reagiert die Pumpe - vereinfacht gesagt - auf niedrige Temperaturen mit einer Leistungsreduktion. Da in Kälteanlagen niedrige Temperaturen gerade gewünscht sind, würde die Pumpe in diesem Fall niemals eine ausreichende Förderleistung, sondern immer nur die Absenkleistung zur Verfügung stellen.

Selbst wenn ein Nutzer eines Kreiselpumpenaggregats dessen Regelungsarten, sein Kennfeld und die zu versorgende hydraulische Anlage kennt, wird ihm die vorzunehmende Auswahl der richtigen Regelung und gegebenenfalls zusätzlichen Sondereinstellung aufgrund eines überfüllten und unübersichtlichen Einstellungsmenus, das alle möglichen Betriebsarten und/ oder Sondereinstellungen auf einmal anzeigt, nicht einfach gemacht. Versehentlich falsche oder zumindest nachteilige Pumpenkonfigurationen sind deshalb nicht auszuschließen.

Darüber hinaus erfolgt die Konfiguration bei Kreiselpumpenaggregaten nach dem Stand der Technik überwiegend lediglich dadurch, dass bei der Inbetriebnahme eine Regelungsart einer Vielzahl angebotener Regelungsarten ausgewählt und mit ihrer allgemeinen Reglerkonfiguration eingestellt wird. Die Pumpe kennt jedoch weder die Anwendung noch die Anlagenart, in der sie arbeitet, so dass die eingestellte Regelungsart bzw. die Reglerkonfiguration per se nicht an die Anlagenart angepasst sein kann. Dies betrifft insbesondere die Reglerparametrierung. Zum Beispiel müssten hierfür der Proportionalanteil (P-Anteil) und der Integralanteil (I-Anteil) eines PI-Reglers an die Zeitkonstanten, insbesondere an die Reaktionszeiten innerhalb der hydraulischen Anlage angepasst werden, um einen perfekten Regler zu erhalten. Soweit eine manuelle Anpassung der Reglerparametrierung eines Reglers eines Kreiselpumpenaggregats überhaupt möglich ist bzw. angeboten wird, benötigt der Anwender viel Erfahrung hierzu. In der Praxis werden manuelle Regleranpassungen jedoch nicht durchgeführt, so dass die Regler mit ihren Werkseinstellungen arbeiten. Es versteht sich von selbst, dass diese Werkseinstellungen Mittelwerte sind, die sämtliche möglichen Anlagenarten bzw. Pumpenanwendungen berücksichtigen. Gleichwohl bleibt somit eine exakte Anpassung eines Reglers an die Anlage, in der er arbeitet, aus.

Die deutsche Patentanmeldung DE 102014003249 A1 beschreibt ein Konfigurationsverfahren für ein Kreiselpumpenaggregat in einer hydraulischen Anlage.

Die deutsche Patentanmeldung DE 102012104214 A1 beschreibt eine externe Konfigurationseinrichtung für ein Pumpenaggregat, beispielsweise ein Smartphone, mittels welcher eine Konfiguration des Pumpenaggregats über eine Kommunikationsverbindung, insbesondere kabellos vorgenommen werden kann. Erläuterungen, wie die Konfiguration inhaltlich von statten gehen soll, enthält diese Patentanmeldung nicht.

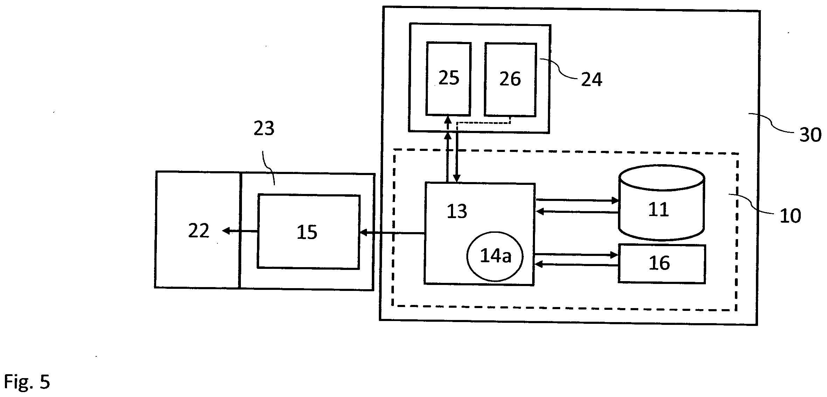

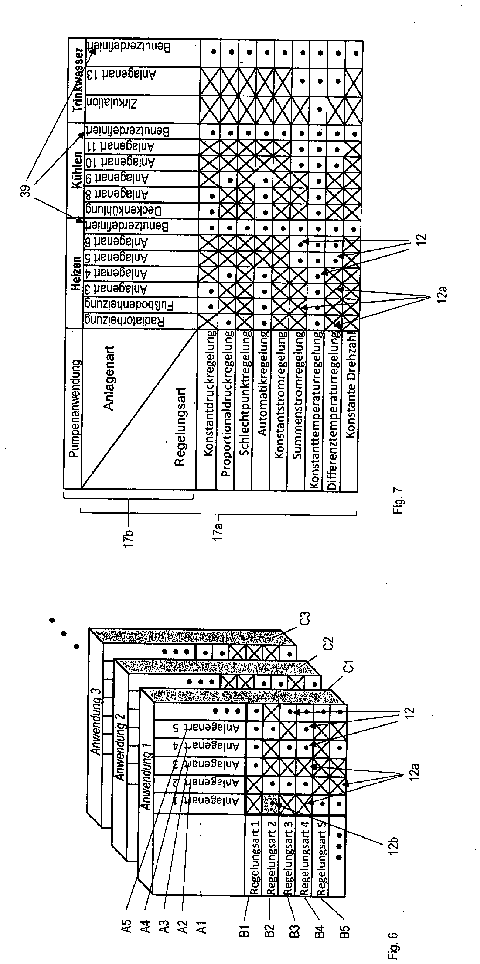

Das Europäische Patent EP 2039935 B1 beschreibt einen dreistufigen Einstellungsassistenten für eine Pumpanlagensteuerung, siehe dort Fig. 5 und 6. Jedoch ist für dessen Verständnis und die möglichen Einstellungen die Konsultation der Bedienungsanleitung erforderlich, da die Einstellungsmöglichkeiten hier nicht selbsterklärend und nicht intuitiv sind.

Die europäische Patentanmeldung EP 2273116 A2 beschreibt unter anderem eine Steuereinheit mit Bedientafel für eine motorisch angetriebene Pumpe, wobei über die Bedientafel umfangreiche Einstellungen für die Motorpumpe vorgenommen werden können. Figuren 16, 17 und 19 zeigen diverse Einstellungsmöglichkeiten eines PID-Reglers, die manuell tief in Untermenüs vorgenommen werden müssen. Eine Anpassung dieses Pumpensystems an eine bestimmte Anwendung/ Anlagenart ist somit nur aufwändig und schwer möglich.

Es ist Aufgabe der vorliegenden Erfindung ein Konfigurationsverfahren für ein drehzahlregelbares Kreiselpumpenaggregat sowie einen Konfigurationsassistenten für ein Kreiselpumpenaggregat zur Durchführung des Verfahrens bereitzustellen, das die Konfiguration des Kreiselpumpenaggregats auf einfachem und verständlichem Wege unterstützt und eine Anpassung des Kreiselpumpenaggregats an die hydraulische Anlage ermöglicht, wobei Fehleinstellungen vermieden werden.

Diese Aufgabe wird durch ein Verfahren mit den Merkmalen des Anspruchs 1 sowie durch einen Konfigurationsassistenten nach Anspruch 20 gelöst. Vorteilhafte Weiterbildungen sind in den Unteransprüchen angegeben und werden nachfolgend erläutert.

Bei dem erfindungsgemäßen Konfigurationsverfahren für ein drehzahlregelbares Kreiselpumpenaggregat in einer hydraulischen Anlage, das bestimmungsgemäß für eine Vielzahl unterschiedlicher Anlagenarten einsetzbar und in einer Vielzahl verschiedener Regelungsarten mit einer entsprechenden Reglerkonfiguration betreibbar ist, ist vorgesehen, dass einer Konfigurationseinrichtung von einer Bedienperson zumindest eine der Anlagenarten und/ oder eine der Regelungsarten vorgegeben wird. Die Konfigurationseinrichtung umfasst eine gespeicherte vordefinierte Zuordnung, bei der jeder der Anlagenarten zumindest eine der Regelungsarten zugeordnet ist. Ferner umfasst die Konfigurationseinrichtung eine Vielzahl anwendungsspezifischer Reglerkonfigurationen. Dabei sind die in der Zuordnung enthaltenen Kombinationen aus einer Anlagenart und einer Regelungsart jeweils mit einer der Reglerkonfigurationen verknüpft. Gemäß dieser Zuordnung wählt die Konfigurationseinrichtung in Abhängigkeit der vorgegebenen Anlagenart und/ oder vorgegebenen Regelungsart die entsprechend verknüpfte Reglerkonfiguration aus und stellt sie am Kreiselpumpenaggregat ein. Auf diese Weise wird ein Kreiselpumpenaggregat anwendungsspezifisch sinnvoll konfiguriert, ohne dass die Bedienperson weitere Einstellungen vornehmen muss, obgleich diese nicht ausgeschlossen sind und gemäß einer Weiterbildung durchaus erfolgen können.

Die Konfigurationseinrichtung umfasst einen softwarebasierten Konfigurationsassistenten zur Ausführung des erfindungsgemäßen Verfahrens. Es dient zur Einstellung einer Regelungsart bei dem drehzahlregelbaren Kreiselpumpenaggregat und umfasst Programmmittel (Software, Quellcode) zur Abarbeitung bei der Ausführung auf einem Prozessor, der wiederum Teil der Konfigurationseinrichtung ist, sowie eine Vielzahl vordefinierter anwendungsspezifischer Reglerkonfigurationen. Die genannte Zuordnung einschließlich die Vielzahl an Reglerkonfigurationen sind Teil des Konfigurationsassistenten und verleihen ihm die Intelligenz zur sinnvollen, anwendungsspezifischen Konfiguration des Kreiselpumpenaggregats. So ist in den Programmmitteln jeder der Anlagenarten zumindest eine der Regelungsarten zugeordnet und jede Kombination aus Anlagenart und zugeordneter Regelungsart mit einer der vordefinierten, anwendungsspezifischen Reglerkonfiguration verknüpft. Der Konfigurationsassistent kann von der Bedienperson bei Bedarf, beispielsweise bei der Erstinbetriebnahme des Kreiselpumpenaggregats gestartet werden und unterstützt dann die Vorgabe der Anlagenart und/ oder der Regelungsart durch die Bedienperson. Die Reglerkonfigurationen können in zumindest einer von den Programmmitteln abfragbaren Datenbank hinterlegt sein, die ebenfalls wiederum Teil der Konfigurationseinrichtung ist.

Die Grundidee der vorliegenden Erfindung besteht somit darin, für jede der Vielzahl verschiedener Anlagenarten nur jeweils bestimmte Regelungsarten aus der Vielzahl aller Regelungsarten anwendbar zu machen und eine für die jeweilige Anlagenart angepasste sinnvolle Reglerkonfiguration bereitzustellen, bzw. in der Konfigurationseinrichtung/ dem Konfigurationsassistenten zu hinterlegen. Jede Reglerkonfiguration ist anwendungsspezifisch vordefiniert, das heißt an die entsprechende Anlagenart angepasst. Durch jede dieser Reglerkonfigurationen wird die jeweilige Regelungsart, die bei ihrer Auswahl als generische oder unspezifische Regelungsart betrachtet werden kann, anwendungsspezifisch mit allen notwendigen Parametern und gegebenenfalls weiteren Einstellungen implementiert, so dass die generische Regelungsart zu einer anwendungsspezifischen Regelungsfunktion wird. Durch die Angabe einer Anlagenart und einer Betriebsart, zu deren Angabe der Konfigurationsassistent sinnvollerweise auffordert, wird er in die Lage versetzt, eine anwendungsspezifische Reglerkonfiguration zu laden und einzustellen.

Geeigneterweise umfasst jede Reglerkonfiguration einen Regelungsalgorithmus zur Implementierung der entsprechenden Regelungsart und einen Datensatz mit Reglerkonfigurationsdaten zur Implementierung des Regelungsalgorithmus.

Der Regelungsalgorithmus definiert eine technische Struktur, um den Betriebspunkt der Pumpe so einzustellen, dass ein bestimmtes Regelziel erreicht wird, insbesondere ein Sollwert einer Führungsgröße eingestellt, insbesondere eingeregelt wird. Der Regelungsalgorithmus kann beispielsweise durch einen technischen Regelkreis mit einem PI-Regler oder einem PID-Regler mit negativer oder gegebenenfalls auch positiver Rückkopplung, oder durch einen komplexeren Algorithmus gebildet sein. Einen komplexen Regelungsalgorithmus besitzen beispielsweise automatisch arbeitende Regelungsarten, wie sie u.a. in den Patentanmeldungen DE 102011012211 A1 oder DE 102014018020 A1 beschrieben sind. Sie benötigen keine Sollwertvorgabe, weil sie den Sollwert einer Führungsgröße wie z.B. der Förderhöhe, selbst aus dem Bedarf der Anlage, beispielsweise aus der Änderung des Anlagenzustands ermitteln.

Die Reglerkonfigurationsdaten umfassen die Reglerparameter, wie beispielsweise die Verstärkungsfaktoren für den Proportionalanteil zur proportionalen Reaktion auf den Regelfehler, den Integralanteil für die Vermeidung bleibender Regelfehler und gegebenenfalls auch für einen Differentialanteil zur Reaktion auf eine Regelfehleränderung. Eine Reglerkonfiguration kann zudem auch den Reglerwirksinn umfassen. Dies ist insbesondere bei kombinierten Heiz-Kühlanlagen von Bedeutung, bei denen zum Übergang von der einen zur anderen Betriebsart der Reglerwirksinn umgedreht werden muss. Zusätzlich können die Reglerkonfigurationsdaten auch Grenzwerte für einen vorzugebenden Sollwert und/ oder für die Reglerparameter für eine nachträgliche manuelle Anpassung der Parameter umfassen. Benötigt eine Regelungsart einen Sensor, kann eine Reglerkonfiguration auch den Sensor betreffende Konfigurationsdaten umfassen, beispielsweise Parameter wie Dämpfung oder Skalierung des Sensorsignals.

Die Vielzahl an Regelungsarten kann beispielsweise einige oder alle der folgenden generischen Regelungsarten umfassen. Diese lassen sich im Hinblick auf die Regelgröße einteilen in die Regelungstypen Druckregelung, Volumenstromregelung und Temperaturregelung.
- Regelung auf einen konstanten Differenzdruck über dem Kreiselpumpenaggregat, d.h. unabhängig vom Förderstrom;
- Regelung auf einen konstanten Differenzdruck über eine hydraulische Strecke vom Kreiselpumpenaggregat zu einem Punkt (Schlechtpunkt) der hydraulischen Anlage;
- Regelung auf einen variablen, förderstromabhängigen Differenzdruck über dem Kreiselpumpenaggregat, insbesondere proportionalen Differenzdruck;
- Regelung auf einen konstanten Absolutdruck am Ausgang des Pumpenaggregats;
- Regelung auf einen konstanten Absolutdruck an einem Punkt (Schlechtpunkt) der hydraulischen Anlage;
- Regelung auf einen variablen Absolutdruck am Ausgang des Pumpenaggregats;
- Automatische Anpassung des Betriebspunktes an den Bedarf der hydraulischen Anlage;
- Regelung auf konstanten Förderstrom unabhängig von der Förderhöhe;
- Regelung auf einen Förderstrom, der der Summe anderer Pumpenaggregate entspricht (Summenvolumenstromregelung),
- Regelung auf eine konstante Zieltemperatur;
- Regelung auf eine konstante Raumtemperatur;
- Regelung auf eine konstante Vorlauftemperatur;
- Regelung auf eine konstante Rücklauftemperatur;
- Regelung auf eine variable Temperatur über dem Volumenstrom;
- Regelung auf eine konstante Differenztemperatur auf der Primärseite einer hydraulischen Entkopplung;
- Regelung auf eine konstante Differenztemperatur auf der Sekundärseite einer hydraulischen Entkopplung;
- Regelung auf eine konstante Differenztemperatur zwischen der Primärseite und der Sekundärseite einer hydraulischen Entkopplung;
- Regelung auf eine variable Temperaturdifferenz über dem Volumenstrom;

Die vorstehende Aufzählung ist nicht abschließend. So kann die Vielzahl an Regelungsarten andere oder weitere, hier nicht genannte Regelungsarten umfassen.

Jede der Regelungsarten kann in zumindest einer Anlagenart verwendet werden. Manche Regelungsarten können bei zwei oder mehr Anlagenarten eingesetzt werden. Die Vielzahl Anlagenarten kann beispielsweise einige oder alle der folgenden hydraulischen Anlagenarten umfassen:
- Heizung mit Heizkörpern, Radiatorheizung;
- Fußbodenheizung;
- Deckenheizung;
- Gebläseunterstützte Wasser/ Luft Wärmetauscher zur Heizung im Raum, Gebläsekonvektor zum Heizen;
- Heizungsanlage mit hydraulischer Weiche;
- Heizungsanlage mit Wärmetauscher;
- Deckenkühlung;
- Fußbodenkühlung;
- Gebläseunterstützte Wasser/ Luft Wärmetauscher zur Kühlung im Raum, Gebläsekonvektor zum Kühlen;
- Kühlanlage mit hydraulischer Weiche;
- Kühlanlage mit Wärmetauscher;
- Heißwasserzirkulation in Trinkwasseranlage;
- Trinkwasseranlage mit Speicherladesystem;

Die vorstehende Aufzählung ist nicht abgeschlossen. So kann die Vielzahl an Anlagenarten andere oder weitere, hier nicht genannte Anlagenarten umfassen.

Bezüglich der Kombinationen von Anlagenart und Regelungsart seien nachfolgend einige Beispiele gegeben. Z.B. kann die Regelungsart "Regelung auf einen konstanten Differenzdruck über dem Kreiselpumpenaggregat" bei den Anlagenarten Fußbodenheizung, Deckenheizung, Deckenkühlung und Fußbodenkühlung eingesetzt werden. Bei der erfindungsgemäßen Zuordnung kann somit die Konstantdruck-Regelung den genannten vier Anlagenarten zugeordnet sein. Andererseits kann bei der Anlagenart "Fußbodenheizung" neben einer Konstantdruck-Regelung auch die Regelungsart "Automatische Anpassung des Betriebspunktes an den Bedarf der hydraulischen Anlage" oder eine Regelung auf eine konstante Raumtemperatur verwendet werden. Bei der erfindungsgemäßen Zuordnung können somit der Anlagenart "Fußbodenheizung" die drei genannten Regelungsarten zugeordnet sein.

Des Weiteren können in der Zuordnung der Anlagenart "Heizungsanlage mit hydraulischer Weiche" beispielsweise die Regelungsarten "konstante Vorlauftemperatur", "konstante Temperaturdifferenz zwischen dem Rücklauf des Primärkreises und dem Rücklauf des Sekundärkreises" oder "Summenvolumenstromregelung" zugeordnet sein. Andererseits kann die Summenvolumenstromregelung den Anlagenarten "Heizungsanlage mit hydraulischer Weiche", "Heizungsanlage mit Wärmetauscher", "Kühlanlage mit hydraulischer Weiche", "Kühlanlage mit Wärmetauscher" und "Trinkwasseranlage mit Speicherladesystem" zugeordnet sein.

Betrachtet man die Regelungsart "konstante Zieltemperatur", so kann diese in Abhängigkeit der konkreten Anlagenart bzw. Anwendung unterschiedlich implementiert sein, obgleich der Regelungsalgorithmus eines Temperaturreglers grundsätzlich gleich ist. Ein Unterschied ist zum einen die Regelgröße, die mal eine Raumtemperatur, mal eine Medientemperatur, hier insbesondere die Vorlauftemperatur oder die Rücklauftemperatur sein kann. Im Falle der Regelung einer hydraulischen Weiche oder eines Wärmetauschers kann zudem bei der Vorlauf- und Rücklauftemperatur noch unterschieden werden zwischen dem Primärkreis und dem Sekundärkreis, bzw. dem Heiz- oder Kühlkreis/ Versorgerkreis und dem Verbraucherkreis. Ein weiterer Unterschied besteht in der Reglerparametrierung, da diese an die Zeitkonstanten der hydraulischen Anlage angepasst sein sollten, damit der Regler nicht zu flink oder zu träge ist. Dieses Beispiel veranschaulicht, dass ein- und dieselbe Regelungsart bei unterschiedlichen Anlagenarten bzw. Anwendungen unterschiedlich zu implementieren ist.

Die erfindungsgemäße Zuordnung kann in Gestalt einer Tabelle oder Matrix veranschaulicht werden, wie sie nachfolgend noch erläutert wird. Sie kann in Form einer Tabelle im Quellcode des Konfigurationsassistenten umgesetzt sein oder direkt, d.h. ohne Erkennung einer tabellarischen Struktur, beispielsweise mittels Kontrollstrukturen wie IF, THEN, ELSE im Quellcode umgesetzt sein.

Um die Einstellung einer mit einer Anlagenart/ Regelungsart-Kombination verknüpfte Reglerkonfiguration zu ermöglichen, benötigt die Konfigurationseinrichtung bzw. der Konfigurationsassistent im Allgemeinen lediglich eine Information darüber, in welcher Anlagenart das Kreiselpumpenaggregat verbaut ist, und in welcher Regelungsart es betrieben werden soll. Sofern in der Zuordnung jedoch einer Anlagenart nur eine einzige Regelungsart zugeordnet ist, ist die Vorgabe der Regelungsart mangels Alternative entbehrlich. In diesem Fall muss die Bedienperson keine Regelungsart vorgeben. Vielmehr kann die mit der Kombination aus vorgegebener Anlagenart und dieser zugeordneten Regelungsart verknüpfte Reglerkonfiguration direkt eingestellt werden.

Notwendigerweise erfolgt die Vorgabe der Anlagenart und der Regelungsart in einer bestimmten zeitlichen Reihenfolge. Gemäß einer ersten, bevorzugten Ausführungsvariante, fordert die Konfigurationseinrichtung bzw. der Konfigurationsassistent zunächst zur Vorgabe der Anlagenart und danach zur Vorgabe der Regelungsart auf. Dies kann dadurch erfolgen, dass auf einer Anzeige eine Darstellung der hydraulischen Anlagenarten angezeigt und auf eine Auswahl einer der dargestellten Anlagenarten durch die Bedienperson gewartet wird, und dass gemäß der vordefinierten Zuordnung in Abhängigkeit der ausgewählten Anlagenart auf der Anzeige eine Darstellung derjenigen Regelungsart oder Regelungsarten angezeigt wird, die der ausgewählten Anlagenart zugeordnet ist/ sind, und auf die Auswahl der oder einer der dargestellten Regelungsarten durch die Bedienperson gewartet wird, wobei infolge dieser Auswahl die mit der ausgewählten Regelungsart verknüpfte Reglerkonfiguration am Kreiselpumpenaggregat (2) eingestellt wird. Im Falle der Auswahl einer der Anlagenarten, der nur eine der Regelungsarten zugeordnet ist, kann alternativ zum Anzeigen und Warten auf die Auswahl dieser einzigen Regelungsart automatisch direkt die mit dieser einen Regelungsart verknüpfte Reglerkonfiguration am Kreiselpumpenaggregat eingestellt werden.

Dieses Vorgehen, bei dem die Konfiguration des Pumpenaggregats zunächst mit Blick auf die Anlage/ Anwendung erfolgt, in der es sich befindet, ist die Konfiguration besonders intuitiv und auch für eine Bedienperson mit wenig Erfahrung auf einfache Weise möglich.

Gemäß einer zweiten Ausführungsvariante, fordert die Konfigurationseinrichtung bzw. der Konfigurationsassistent zunächst zur Vorgabe der Regelungsart und danach zur Vorgabe der Anlagenart auf. Dies kann dadurch erfolgen, dass auf einer Anzeige eine Darstellung der Regelungsarten angezeigt und auf eine Auswahl einer der dargestellten Regelungsarten durch die Bedienperson gewartet wird, und dass gemäß der Zuordnung in Abhängigkeit der ausgewählten Regelungsart auf der Anzeige eine Darstellung derjenigen Anlagenart oder Anlagenarten angezeigt wird, die der ausgewählten Regelungsart zugeordnet ist/ sind, und auf die Auswahl der oder einer der dargestellten Anlagenarten durch die Bedienperson gewartet wird, wobei infolge dieser Auswahl die mit der Kombination aus ausgewählter Regelungsart und ausgewählter Anlagenart verknüpfte Reglerkonfiguration am Kreiselpumpenaggregat eingestellt wird. Im Falle der Auswahl einer der Regelungsarten, der nur eine der Anlagenartenarten zugeordnet ist, kann alternativ zum Anzeigen und Warten auf die Auswahl dieser einzigen Anlagenart automatisch direkt die mit der Kombination der ausgewählten Regelungsart und einzig zugeordneten Anlagenart verknüpfte Reglerkonfiguration am Kreiselpumpenaggregat eingestellt werden.

Bei der erfindungsgemäßen Zuordnung der Regelungsarten zu den Anlagenarten ist zum einen die Sinnhaftigkeit grundsätzlicher Kombinationsmöglichkeiten von Anlagenart und Betriebsart berücksichtigt, so dass bereits bestimmte Kombinationen mangels eines technischen Sinns nicht in Frage kommen. So macht beispielsweise eine Regelung auf eine Konstante Rücklauftemperatur für eine Primärkreispumpe wenig Sinn, weil dies der Hauptaufgabe, nämlich der Versorgung der Verbraucher auf der Sekundärseite zuwiderläuft. Eine Proportionaldruckregelung bei einer Fußbodenheizung oder Deckenkühlung wäre ebenfalls nachteilig, weil hier die Druckverluste maßgeblich in den Verbrauchern, d.h. in den Heiz- oder Kühlkreisen liegen, und eine Absenkung des Drucks bei verbraucherventilbedingter Verringerung des Volumenstroms zu einer Unterversorgung der Heiz- bzw. Kühlkreise kommen könnte.

Zusätzlich sind die Kombinationen in der Zuordnung so gebildet, dass ein möglichst energieoptimaler Betrieb des Kreiselpumpenaggregats erreicht wird. So könnte beispielsweise bei einer Heizungsanlage mit Heizkörpern (Radiatoren = ventilgeregelte Verbraucher) in technischer Hinsicht eine Konstantdruck-Regelung angewendet werden. Da hier jedoch der Druckverlust zur einen Hälfte in den Heizkörpern und / oder deren Einzelzuleitungen sowie zur anderen Hälfte in Leitungen besteht, die mehrere oder alle Verbraucher versorgen bzw. im Erzeuger (Brenner), wird der Druckverlust durch das Öffnen und Schließen der Verbraucherventile nur wenig beeinflusst. Der Druck kann somit bei schließenden Verbraucherventilen bzw. abnehmendem Volumenstrom abgesenkt werden, wie bei einer Proportionaldruckregelung. Gegenüber einer Konstantdruckregelung wird hier im Teillastbereich Energie eingespart, Strömungsgeräusche an den Ventilen werden reduziert. Vor diesem Hintergrund umfasst die Zuordnung beispielsweise keine Konstantdruckregelung für die Anlagenart "Heizung mit Heizkörper".

Die vorstehenden Ausführungen zeigen, dass aus verschiedenen Gründen weniger Kombinationsmöglichkeiten von Anlagenart und Regelungsart in der erfindungsgemäßen Zuordnung vorhanden sein können, als es technisch möglich ist. Es kann somit bezüglich der ersten Ausführungsvariante der Fall eintreten, dass der Bedienperson nach Auswahl der entsprechenden Anlagenart eine bestimmte Regelungsart nicht angezeigt wird, die er aber gerne eingestellt hätte.

Um dem erfahrenen Anwender/ der Bedienperson dennoch zu ermöglichen, die Einstellung einer Regelungsart vorzunehmen, die in der Zuordnung nicht vorgesehen ist, kann ihm/ ihr zusätzlich zu den auswählbaren hydraulischen Anlagenarten, d.h. auf derselben Ebene, eine Regelungsartenliste zur Auswahl angezeigt werden, die zumindest einen Teil der Regelungsarten vorzugsweise alle der Vielzahl an Regelungsarten (Gesamtliste der Regelungsarten) beinhaltet. Wählt die Bedienperson diese Regelungsartenliste aus, werden ihr die in der Liste enthaltenen Regelungsarten dargestellt. Die Bedienperson kann nun eine Auswahl aus dieser Regelungsartenliste treffen. Die Konfigurationseinrichtung bzw. der Konfigurationsassistent warten hier dann entsprechend auf eine Auswahl.

Durch die Angabe der Anlagenart erhält das Pumpenaggregat zum einen eine Information über die physikalische bzw. hydraulische Struktur und Komponenten der hydraulischen Anlage, in die es eingebaut ist. Zum anderen erhält das Pumpenaggregat eine Information über die Anwendung bzw. den Zweck, in der es betrieben werden soll. Um das erfindungsgemäße Konfigurationsverfahren weiter zu vereinfachen, insbesondere die Anzahl auswählbarer Anlagenarten zu reduzieren, können die Anlagenarten jeweils einer bestimmten Pumpenanwendung zugeordnet sein, zu deren Auswahl, die Konfigurationseinrichtung bzw. der Konfigurationsassistent auffordert. Vorzugsweise ist in den Programmmitteln jede der Anlagenarten einer Pumpenanwendung von mehreren Pumpenanwendungen zugeordnet ist. Es kann vorgesehen sein, dass vor der Darstellung der Anlagenarten auf der Anzeige eine Darstellung von Pumpenanwendungen angezeigt und auf eine Auswahl einer dieser Pumpenanwendungen durch die Bedienperson gewartet wird, und dass anschließend gemäß einer vordefinierten Zuordnung, bei der jeder der Pumpenanwendungen zumindest eine der Anlagenarten zugeordnet ist, in Abhängigkeit der ausgewählten Pumpenanwendung nur Anlagenarten zur Auswahl dargestellt werden, die der ausgewählten Pumpenanwendung zugeordnet. Entsprechend können die Programmmittel des Konfigurationsassistenten dazu eingerichtet sein, auf der Anzeige eine Darstellung der Pumpenanwendungen anzuzeigen und auf eine Auswahl einer der dargestellten Pumpenanwendungen zu warten, und anschließend nur diejenigen hydraulischen Anlagenarten darzustellen, die der ausgewählten Pumpenanwendung zugeordnet sind.

Die Darstellung der Pumpenanwendungen kann beispielsweise zumindest zwei der folgenden Pumpenanwendungen umfassen: "Heizen", "Kühlen" und "Trinkwasser". Der Anwendung "Heizen" können die Anlagenarten Heizung mit Heizkörpern, Radiatorheizung, Fußbodenheizung, Deckenheizung, gebläseunterstützte Wasser/ Luft Wärmetauscher zur Heizung im Raum, Gebläsekonvektor zum Heizen, Heizungsanlage mit hydraulischer Weiche und Heizungsanlage mit Wärmetauscher zugeordnet sein. Der Anwendung "Kühlen" können die Anlagenarten Deckenkühlung, Fußbodenkühlung, gebläseunterstützte Wasser/ Luft Wärmetauscher zur Kühlung im Raum, Gebläsekonvektor zum Kühlen, Kühlanlage mit hydraulischer Weiche, Kühlanlage mit Wärmetauscher zugeordnet sein. Der Anwendung "Trinkwasser" können die Anlagenarten Trinkwasserzirkulation und Trinkwasserspeicher zugeordnet sein.

Vorzugsweise ist die vordefinierte Zuordnung der Anlagenarten zu einer der Pumpenanwendungen ebenfalls in der Konfigurationseinheit hinterlegt bzw. Teil des Konfigurationsassistenten. Die Hinterlegung kann auch hier in Gestalt einer Tabelle erfolgen oder direkt implementiert in den Quellcode des Konfigurationsassistenten sein.

Der Konfigurationsassistent besitzt somit in Summe drei Konfigurationsebenen, die der Bedienperson zur Anzeige gebracht werden, um eine entsprechende Auswahl zu treffen, nämlich eine Anwendungsebene zur Auswahl der Pumpenanwendung, eine Anlagenebene zur Auswahl der Anlagenart und eine Regelungsebene zur Auswahl der Regelungsart. Die Pumpenkonfiguration ist dadurch besonders übersichtlich und intuitiv. Es sind jedoch auch vier oder mehr Konfigurationsebenen denkbar, wie z.B. Pumpenanwendung > Anlagenhauptgruppe > Anlagenuntergruppe > Anlagenart > Regelungsart. Als Beispiel sei hier genannt: Heizung > Wärmeerzeuger > hydraulisch entkoppelt > Weiche > Differenztemperaturregelung (dT). Je mehr anwendungsspezifische Regelungsarten das Kreiselpumpenaggregat beherrscht, desto sinnvoller ist eine Gruppierung, da anderenfalls aus einer lange Liste an Anlagenarten gewählt werden muss.

Um das Konfigurationsverfahren noch weiter zu verbessern, kann die Darstellung der Anlagenarten und/ oder der Regelungsarten und/ oder der Pumpenanwendungen auf der Anzeige als Liste erfolgen. Somit sind alle auswählbaren Möglichkeiten untereinanderstehend angeordnet. Von Vorteil ist es, wenn jede Liste in einem Dialogfenster angezeigt wird. Hierdurch wird die Darstellung insgesamt übersichtlich und die Unterscheidung der Auswahlebene wird erleichtert, da stets nur diejenigen Informationen auf der Anzeige dargestellt werden, die für die jeweilige Auswahl aktuell benötigt wird.

Neben den verschiedenen Regelungsarten sind bei Kreiselpumpenaggregaten Sondereinstellungen, insbesondere Sonderfunktionen bekannt, wie sie bereits in der Beschreibungseinleitung erwähnt und erläutert sind. Zu nennen sind bei beispielsweise die Nachabsenkung, eine Volumenstrombegrenzung oder der No-Flow Stop.

Im Trinkwasserbereich ist die "thermische Desinfektion" eine Zusatzfunktion der hydraulischen Anlage, bei der die Temperatur im Warmwasserspeicher zeitweise angehoben wird. Für diese Funktion kann in dem Pumpenaggregat eine entsprechende Sonderfunktion vorgesehen sein, bei der die Trinkwassertemperatur mit einem Fühler überwacht wird. Stellt das Pumpenaggregat eine Temperatur auf Desinfektionsniveau fest, reagiert sie mit maximaler Leistung, um die Durchspülung des Zirkulationsnetzes mit heißem Wasser zu unterstützen. So kann die Pumpe auf maximale Drehzahl oder auf eine höhere Solltemperatur oder allgemein auf einen höheren Sollwert regeln. Ist die Pumpe im Rücklauf angeordnet kann die Wassertemperatur mit einem externen Fühler direkt an der Quelle (am Trinkwasserspeicher oder seinem Austritt) überwacht werden. Ist die Pumpe im Vorlauf montiert, kann ein in das Pumpenaggregat integrierter Temperatursensor für die Messung der Wassertemperatur verwendet werden.

Weitere geeignete Sondereinstellungen sind insbesondere die Vorgabe des Auslegungspunktes der Anlage (Nennpunkteingabe), die Vorgabe einer minimalen Förderhöhe, eine untere Volumenstromgrenze (Q-Minimum) oder die Berücksichtigung von Mischern in Sekundärkreisen.

Einzelne Sonderfunktionen können bei Bedarf aktiviert oder deaktiviert werden und agieren zusätzlich oder ergänzend zum Regler. Zudem können bestimmte Einstellungen sinnvolle oder erforderliche Ergänzungen oder Änderungen des Regelungsalgorithmus oder seiner Reglerparameter bewirken, um die Reglerkonfiguration genauer an die hydraulische Anlage anzupassen.

Da auch bezüglich der Sondereinstellungen bei der Pumpenkonfiguration Fehleinstellungen erfolgen können, weil beispielsweise eine ungeeignete Sondereinstellung aktiviert wird oder eine erforderliche Einstellung nicht erfolgt, ist es von Vorteil, wenn die Konfigurationseinrichtung bzw. der Konfigurationsassistent eine Hilfestellung für eine sinnvolle Aktivierung der Sonderfunktionen je nach Bedarf anbietet.

So kann beispielsweise vorgesehen sein, dass das Kreiselpumpenaggregat über eine Vielzahl von Sondereinstellungen zu den Regelungsarten verfügt, wobei in Abhängigkeit der angegebenen Anlagenart und/ oder einer ausgewählten Pumpenanwendung eine Einschränkung der verfügbaren Sondereinstellungen und/ oder eine Aktivierung zumindest einer der Sondereinstellungen erfolgt. Alternativ oder zusätzlich kann vorgesehen sein, dass den Kombinationen aus Anlagenart und Regelungsart eine oder mehrere Sondereinstellungen einer Vielzahl möglicher Sondereinstellungen zugeordnet ist/ sind. Im erstgenannten Fall sowie bei der Zuordnung ist berücksichtigt, welche Sondereinstellung bezogen auf die konkrete Regelungsart und die konkrete Anwendung/ Anlagenart sinnvoll oder vorteilhaft ist und welche weniger Sinn macht, welche erforderlich und welche optional ist. Entsprechend umfasst die Zuordnung lediglich die sinnvollen, erforderlichen und optionalen Sondereinstellungen.

Auch diese Zuordnung der Sondereinstellungen zu den Kombinationen ist bevorzugt Teil des Konfigurationsassistenten und in der Konfigurationseinrichtung entsprechend hinterlegt, beispielsweise als Tabelle oder als Teil des Quellcodes des Konfigurationsassistenten. So kann der Konfigurationsassistent eine Vielzahl aktivierbarer Sondereinstellungen umfassen, wobei innerhalb der Programmmittel den Kombinationen aus Anlagenart und Regelungsart jeweils eine oder mehrere der Sondereinstellungen zugeordnet ist/ sind. Die Zuordnung verleiht dem Konfigurationsassistenten zusätzliche Intelligenz.

Von den zugeordneten Sondereinstellungen können eine, mehrere oder alle auf der Anzeige dargestellt werden, sobald die verknüpfte Reglerkonfiguration feststeht. Die Darstellung kann vor oder nach der Einstellung der Reglerkonfiguration erfolgen.

Von den dargestellten Sondereinstellungen kann zumindest eine oder können zwei oder alle durch die Bedienperson jeweils auswählbar bzw. aktivierbar sein.

Falls eine der zugeordneten Sondereinstellungen für eine bestimmte Kombination aus Anlagenart und Regelungsart erforderlich ist, kann diese unmittelbar bei der Einstellung der verknüpften Reglerkonfiguration aktiviert werden. Zusätzlich oder alternativ kann, falls eine der zugeordneten Sondereinstellungen für eine bestimmte Kombination aus Anlagenart und Regelungsart vorteilhaft ist, diese Sondereinstellung unmittelbar bei der Einstellung der verknüpften Reglerkonfiguration aktiviert werden.

Durch die manuelle oder automatische Auswahl bzw. Aktivierung einer Sondereinstellung wird eine zur ausgewählten Regelungsart zusätzlich wirkende Sonderfunktion aktiviert oder die Reglerkonfiguration geändert.

Bei der Darstellung der Sondereinstellung oder Sondereinstellungen auf der Anzeige kann auch der Aktivierungszustand angezeigt oder angegeben sein, so dass sich die Bedienperson direkt informieren kann, ob eine bestimmte Sonderfunktion aktiviert ist.

Vorzugsweise kann vorgesehen sein, dass eine unmittelbar aktivierte Sondereinstellung für eine Deaktivierung gesperrt ist. Dies ist vor allem dann vorteilhaft, wenn es sich um eine erforderliche Sondereinstellung handelt. Somit ist sichergestellt, dass eine zuvor korrekte Konfiguration nicht wieder unbewusst verschlechtert wird.

Es kann vorgesehen sein, dass eine aktivierte erforderliche Sondereinstellung von der Darstellung auf der Anzeige ausgenommen ist, so dass die Bedienperson gar nicht erst über eine mögliche Deaktivierung nachdenkt. Dargestellt werden ihr dann nur die aktivierbaren oder deaktivierbaren Sonderfunktionen.

Gemäß einer vorteilhaften Weiterbildung kann die mit einer Kombination aus Anlagenart und Regelungsart verknüpfte Reglerkonfiguration die Zuordnung einer oder mehrerer der möglichen Sondereinstellungen zu der entsprechenden Kombination mit umfassen.

Die oben genannten Regelungsarten benötigen in der Regel einen Sensor zur Messung der Regelgröße wie Differenzdruck, Volumenstrom, Raum- oder Medientemperatur. Zwar kann die Regelgröße anhand mathematischer Modelle oftmals berechnet oder mittels eines Beobachters geschätzt werden, jedoch ist eine messtechnische Ermittlung meist zuverlässiger. Integrierte Differenzdruck- oder Volumenstromsensoren sind bei Pumpenaggregaten bekannt. Für die Regelung in Abhängigkeit eines Schlechtpunktes der hydraulischen Anlage ist ein zusätzlicher Drucksensor am Schlechtpunkt erforderlich, für die Regelung der Raum- oder Medientemperatur ein Temperatursensor im Raum oder Medium. Für eine Temperaturdifferenzregelung sind sogar zwei Temperatursensoren erforderlich.

Gemäß einer vorteilhaften Weiterbildung des erfindungsgemäßen Konfigurationsverfahrens kann vorgesehen sein, dass die Konfigurationseinrichtung bzw. der Konfigurationsassistent selbsttätig erkennt, wenn ein externer Sensor angeschlossen ist. Die Konfigurationseinrichtung bzw. der Konfigurationsassistent kann aufgrund dieser Information davon ausgehen, dass vom Anwender gewünscht ist, eine Regelungsart einzustellen, die einen Sensor erfordert. Diese Erkenntnis kann dann dazu verwendet werden, die Anzahl der für die Auswahl durch die Bedienperson anzuzeigender Regelungsarten zu reduzieren. Somit kann vorgesehen sein, dass aufgrund eines erkannten Sensors nur diejenige Regelungsart oder diejenigen Regelungsarten auf der Anzeige zur Auswahl dargestellt werden, die einen angeschlossenen Sensor benötigt oder benötigen. Alternativ kann in einer Variante davon ausgegangen werden, dass wenn kein externer Sensor angeschlossen ist, vom Anwender auch nicht die Einstellung einer Regelungsart gewünscht ist, die einen Sensor erfordert. In diesem Fall werden bei dieser Variante die anzuzeigenden Regelungsarten reduziert auf solche, die keine externen Sensoren benötigen. In dieser Variante würden aufgrund eines erkannten Sensors diejenige Regelungsart oder diejenigen Regelungsarten zusätzlich dargestellt werden, die einen angeschlossenen Sensor benötigt oder benötigen.

Gemäß einer Weiterbildung kann vorgesehen sein, dass die Konfigurationseinrichtung bzw. der Konfigurationsassistent selbsttätig erkennt, welcher Typ externer Sensor angeschlossen ist. Somit kann dann aufgrund des erkannten Sensortyps nur oder zusätzlich diejenige Regelungsart oder diejenigen Regelungsarten auf der Anzeige zur Auswahl dargestellt werden, die den angeschlossenen Sensortyp benötigt oder benötigen. Wird beispielsweise erkannt, dass ein Temperatursensor angeschlossen ist, kann darauf geschlossen werden, dass eine Temperaturregelung gewünscht ist.

Gemäß einer anderen Weiterbildung kann zusätzlich oder alternativ vorgesehen sein, dass die Konfigurationseinrichtung bzw. der Konfigurationsassistent selbsttätig die Anzahl angeschlossener Sensoren erkennt. Somit kann dann aufgrund der erkannten Sensoranzahl nur oder zusätzlich diejenige Regelungsart oder diejenigen Regelungsarten auf der Anzeige zur Auswahl dargestellt werden, die eine der Anzahl angeschlossener Sensoren entsprechende Sensoranzahl benötigt oder benötigen. Werden beispielsweise zwei Temperatursensoren angeschlossen, kann von einer gewünschten Temperaturdifferenzregelung ausgegangen werden.

Wird die Pumpenkonfiguration vorgenommen, bevor zumindest ein etwaiger Sensor angeschlossen ist, kann die Konfigurationseinrichtung keine Rückschlüsse auf eine gewünschte Regelungsart ziehen. Gleichwohl ist es dennoch zweckdienlich, wenn die Konfigurationseinrichtung bzw. der Konfigurationsassistent selbsttätig erkennt, ob ein externer Sensor angeschlossen ist, insbesondere welcher Typ externer Sensor und/ oder wie viele Sensoren angeschlossen ist/ sind. Denn diese Erkenntnis kann dann dazu verwendet werden, im Falle der Auswahl einer der Regelungsarten, die zumindest einen angeschlossenen Sensor bzw. einen bestimmten Sensortyp oder eine bestimmte Sensoranzahl benötigt, einen Fehler und/ oder eine Handlungsaufforderung auszugeben, wenn kein Sensor oder nicht der benötigte Sensortyp oder ein Sensor zu wenig angeschlossen ist. Der Fehler kann beispielsweise darauf hinwiesen, dass ein anzuschließender Sensor fehlt. Die Handlungsaufforderung kann zum Anschließen eines bestimmten Sensors oder zur Überprüfung der Sensorverbindung auffordern.

Bei der Regelung auf einen Förderstrom, der der Summe anderer Pumpenaggregate entspricht (Summenvolumenstromregelung), ist es erforderlich, dass dem zu regelnden Kreiselpumpenaggregat der Volumenstrom der anderen Pumpen mitgeteilt wird. Dies setzt voraus, dass das zu konfigurierende Pumpenaggregat mit den anderen Pumpenaggregaten datentechnisch vernetzt ist oder auf andere Weise die Information über den Volumenstrom der anderen Pumpen erhält, beispielsweise von einer Gebäudeleittechnik. In beiden Fällen kann das zu konfigurierende Pumpenaggregat über einen Bus oder per Funk mit den anderen Pumpenaggregaten oder der Gebäudeleittechnik verbunden sein.

Vor diesem Hintergrund kann gemäß einer anderen vorteilhaften Weiterbildung des erfindungsgemäßen Konfigurationsverfahrens vorgesehen sein, dass die Konfigurationseinrichtung bzw. der Konfigurationsassistent selbsttätig erkennt, wenn es mit zumindest einem anderen Kreiselpumpenaggregat verbunden, insbesondere vernetzt ist, beispielsweise anhand der Feststellung, dass bzw. ob ein Schnittstellenmodul zum Anschluss an ein Pumpennetzwerk in der Pumpenelektronik gesteckt ist. Die Erkenntnis der Verbindung mit zumindest einem anderen Kreiselpumpenaggregat kann dann dazu verwendet werden, die Anzahl der für die Auswahl durch die Bedienperson anzuzeigender Regelungsarten zu reduzieren oder zu erweitern. Somit kann vorgesehen sein, dass aufgrund der erkannten Verbindung zu oder Vernetzung mit zumindest einem anderen Kreiselpumpenaggregat nur oder zusätzlich diejenige Regelungsart oder diejenigen Regelungsarten auf der Anzeige zur Auswahl dargestellt wird oder werden, die eine Verbindung oder Vernetzung mit zumindest einem anderen Kreiselpumpenaggregat benötigt/ benötigen.

Wird die Pumpenkonfiguration vorgenommen, bevor die datentechnische Verbindung des zu konfigurierenden Kreiselpumpenaggregats zu mindestens einem anderen Kreiselpumpenaggregat erfolgt ist, kann die Konfigurationseinrichtung keine Rückschlüsse auf die gewünschte Regelungsart ziehen. Gleichwohl ist es dennoch zweckdienlich, wenn die Konfigurationseinrichtung bzw. der Konfigurationsassistent selbsttätig erkennt, ob das Kreiselpumpenaggregat mit zumindest einem anderen Kreiselpumpenaggregat verbunden, insbesondere vernetzt ist. Denn diese Erkenntnis kann dann dazu verwendet werden, im Falle der Auswahl einer der Regelungsarten, die eine Verbindung oder Vernetzung mit zumindest einem anderen Kreiselpumpenaggregat benötigt, einen Fehler und/ oder eine Handlungsaufforderung auszugeben, wenn kein anderes Kreiselpumpenaggregat mit dem Kreiselpumpenaggregat verbunden ist. Der Fehler kann beispielsweise darauf hinweisen, dass keine Kommunikationsverbindung zu der oder den anderen Pumpenaggregaten besteht oder dass ein entsprechendes Kommunikationsmodul fehlt. Die Handlungsaufforderung kann zum Anschließen eines Kommunikationsmoduls, Prüfung der Kommunikationsleitung oder zum Aufbau einer Kommunikationsverbindung auffordern.

Zur weiteren Verbesserung des erfindungsgemäßen Konfigurationsverfahrens kann vorgesehen sein, dass bei zwei oder mehr einer Anlagenart zugeordneten Regelungsarten eine dieser Regelungsarten als Voreinstellung verwendet wird. Diese Voreinstellung kann beispielsweise dadurch erfolgen, dass in der Darstellung der auswählbaren Regelungsarten die voreingestellte Regelungsart bereits vorausgewählt ist, so dass die Bedienperson innerhalb der auswählbaren Regelungsarten nicht mehr navigieren muss, also keine andere Regelungsart auswählen muss. Es wird hier somit eine bevorzugte Regelungsart vorgeschlagen. Die Bedienperson braucht dann nur noch die Vorauswahl zu quittieren. Die Vorauswahl kann grafisch gekennzeichnet sein, beispielsweise durch ein Symbol wie ein Häkchen, durch eine Umrahmung oder durch eine farbige Hervorhebung des Hintergrunds, ggf. einer Invertierung, der voreingestellten Regelungsart oder durch Platzierung der voreingestellten Regelungsart an oberster Stelle der Liste auswählbarer Regelungsarten. Alternativ kann die Voreinstellung direkt am Pumpenaggregat eingestellt werden.

Um der Bedienperson nähere Informationen zu der Bedeutung, Wirkung und gegebenenfalls technischen Voraussetzung der einzelnen Auswahlmöglichkeiten zu geben, kann zu jeder Auswahlmöglichkeit ein individueller Erläuterungstext auf der Anzeige dargestellt werden, wenn eine entsprechende Anwahl einer Auswahlmöglichkeit durch die Bedienperson erfolgt. Dies kann bei einer Anwahl einer der Pumpenanwendungen, bei einer Anwahl einer der Anlagenarten, bei einer Anwahl einer der Regelungsarten und/ oder bei einer Anwahl einer der Sondereinstellungen erfolgen. Die Erläuterungstexte sind somit jeweils individuell bezogen auf eine jeweilige Pumpenanwendung, eine jeweilige Anlagenart, eine jeweilige Regelungsart und/ oder eine jeweilige Sondereinstellung. So kann also in Abhängigkeit der Anwahl einer der Anlagenarten und/ oder einer der Regelungsarten und/ oder einer der Pumpenanwendungen und/ oder einer der Sondereinstellungen der ihr zugeordnete individuelle Erläuterungstext auf der Anzeige dargestellt werden und die Bedienperson über die entsprechende Auswahlmöglichkeit z.B. hinsichtlich Bedeutung, Wirkung und gegebenenfalls technischen Voraussetzung wie "es wird ein Temperatursensor benötigt" informieren.

Die Gesamtheit aller Erläuterungstexte kann Teil des Konfigurationsassistenten sein, insbesondere in einer Datenbank hinterlegt sein, auf die der Konfigurationsassistent zugreift. Die Datenbank kann wiederum Teil der Konfigurationseinrichtung sein. Die Programmmittel sind dann entsprechend dazu eingerichtet, bei der Anwahl der entsprechenden Pumpenanwendung, Anlagenart, Regelungsart oder Sondereinstellung den jeweils zugeordneten Erläuterungstext auf der Anzeige anzuzeigen. Dies kann insbesondere in einem zur angewählten Pumpenanwendung, Anlagenart, Regelungsart oder Sondereinstellung separaten Informationsfenster erfolgen.

Die Erfindung betrifft gemäß eines weiteren Aspekts auch ein Kreiselpumpenaggregat, das bestimmungsgemäß für eine Vielzahl unterschiedlicher Anlagenarten einsetzbar und in einer Vielzahl verschiedener Regelungsarten mit einer entsprechenden Reglerkonfiguration betreibbar ist, mit einer Pumpenelektronik, die mit einer Anzeige und mit zumindest einem Eingabemittel in Wirkverbindung steht, wobei die Pumpenelektronik eine Konfigurationseinrichtung mit einem erfindungsgemäßen Konfigurationsassistent zur anwendungsspezifischen Konfiguration des Kreiselpumpenaggregats aufweist. Die Anzeige dient zur Darstellung zumindest einer auswählbaren Anlagenart, zumindest einer auswählbaren Regelungsart, zumindest einer auswählbaren Pumpenanwendung und/ oder zumindest einer aus- oder abwählbaren Sondereinstellung. Das zumindest eine Eingabemittel dient der Anwahl, d.h. der Navigation zu einer bestimmten dargestellten Anlagenart, Regelungsart, Pumpenanwendung oder Sondereinstellung sowie zur Auswahl der entsprechend angewählten Anlagenart, Regelungsart, Pumpenanwendung oder Sondereinstellung. Der Konfigurationsassistent steuert die Anzeige gemäß der Eingabe der Bedienperson am Eingabemittel und stellt zur Konfiguration des Pumpenaggregats eine Regelungsart samt anwendungsspezifischer Reglerkonfiguration in Abhängigkeit der Angaben der Bedienperson ein.

Bei der Anzeige kann es sich beispielsweise um eine Flüssigkristallanzeige (LCD), vorzugsweise ein Farbdisplay handeln, um bestimmte Bereiche auf der Anzeige farblich abzusetzen. Ideal ist es, wenn die Anzeige ein hochauflösendes Display ist, so dass auch grafische Elemente wie Piktogramme und Kurvenverläufe wie z.B. ein HQ-Diagramm gut ablesbar dargestellt werden können. Hinsichtlich der Technologie der Anzeige ist die Erfindung nicht auf eine bestimmte Technologie beschränkt.

Bei dem oder den Eingabemitteln kann es sich beispielsweise um eine drückbare Bedientaste oder einen drehbaren Bedienknopf handeln. Vorzugsweise kann es sich um einen dreh- und drückbaren Bedienkopf handeln. Bei diesem kann dann durch Drehen eine Anlagenart, Regelungsart, Pumpenanwendung oder Sondereinstellung angewählt und durch Drücken ausgewählt werden. Gemäß einer Weiterbildung kann die Bedientaste oder der Bedienknopf als Navigationstaster oder Navigationsknopf ausgebildet sein, so dass eine Navigation auf der Anzeige in den vier Richtung "rauf, runter, links, rechts" möglich ist.

Gemäß einer bevorzugten Ausführungsvariante sind die Anzeige und das Eingabemittel zu einer integrierten Einheit zusammengefasst und bilden somit berührungssensitives Display. Dies hat den Vorteil, dass keine mechanischen Komponenten als Eingabemittel benötigt werden. Vielmehr erfolgt die Eingabe direkt durch Berührung eines bestimmten Bereichs auf dem Display mit einem Finger.

Gemäß einer Ausführungsvariante können die Anzeige und das Eingabemittel baulich eine Einheit mit der Pumpenelektronik bilden. Gemeinsam bilden sie dann ein Elektronikmodul, das auf den Elektromotor des Pumpenaggregats montiert werden kann bzw. montiert ist und in diesem Zustand Teil des Pumpenaggregats ist. Die Konfiguration des Kreiselpumpenaggregats kann dann direkt am Pumpenaggregat erfolgen.

Gemäß einer alternativen Ausführungsvariante können die Anzeige und das Eingabemittel eine von der Pumpenelektronik baulich unabhängige Baueinheit bilden. Die Baueinheit bildet somit ein reines Mensch-Maschine-Interface (HMI). Die Wirkverbindung kann dann dadurch realisiert sein, dass ein Kabel oder eine Funkverbindung zur Kommunikation zwischen der Baueinheit und der Pumpenelektronik vorliegt. Dies ermöglicht es, die Baueinheit extern zum Pumpenaggregat bzw. zur Pumpenelektronik anzuordnen, was in Fällen beengten Bauraums von Vorteil sein kann, insbesondere von aufgrund der Einbausituation keine Einsicht auf das Display und Bedienung von vorn möglich ist. Unabhängig davon kann die Baueinheit aus Anzeige und Eingabemittel aber auch zur Montage auf der Pumpenelektronik vorgesehen sein, so dass es wahlweise am Pumpenaggregat oder extern angeordnet werden kann.

Die Funkverbindung kann beispielsweise nach einem Standard für die FuncKommunikation wie Bluetooth, WLAN, EnOcean, NFC oder dergleichen erfolgen.

Die Erfindung betrifft auch gemäß eines anderen Aspekts eine Anordnung bestehend aus einem Kreiselpumpenaggregat mit einer Pumpenelektronik und einem mobilen Handgerät zur Konfiguration des Kreiselpumpenaggregats, wobei das Handgerät mit dem Kreiselpumpenaggregat über eine Kommunikationsverbindung datentechnisch verbindbar ist, und das Handgerät eine Anzeige und zumindest ein Eingabemittel aufweist, wobei das Handgerät eine Konfigurationseinrichtung mit einem erfindungsgemäßen Konfigurationsassistent zur anwendungsspezifischen Konfiguration des Kreiselpumpenaggregats aufweist und dazu eingerichtet ist, eine mit der ausgewählten Regelungsart verknüpfte Reglerkonfiguration über die Kommunikationsverbindung zu dem Kreiselpumpenaggregat zu übertragen und die Pumpenelektronik dazu eingerichtet ist, die übertragene Reglerkonfiguration einzustellen.

Die Anzeige dient auch in dieser Ausführungsvariante zur Darstellung zumindest einer auswählbaren Anlagenart, zumindest einer auswählbaren Regelungsart, zumindest einer auswählbaren Pumpenanwendung und/ oder zumindest einer aus- oder abwählbaren Sondereinstellung. Das zumindest eine Eingabemittel dient ebenfalls der Anwahl, d.h. der Navigation zu einer bestimmten dargestellten Anlagenart, Regelungsart, Pumpenanwendung oder Sondereinstellung sowie zur Auswahl der entsprechend angewählten Anlagenart, Regelungsart, Pumpenanwendung oder Sondereinstellung. Der Konfigurationsassistent steuert die Anzeige gemäß der Eingabe der Bedienperson am Eingabemittel und stellt zur Konfiguration des Pumpenaggregats eine Regelungsart samt anwendungsspezifischer Reglerkonfiguration in Abhängigkeit der Angaben der Bedienperson bereit, die dann vom Handgerät an die Pumpenelektronik übertragen wird. Diese Übertragung kann direkt erfolgen (Handgerät > Pumpenelektronik) oder indirekt über ein Zwischenmedium wie beispielsweise ein Datenspeicher (z.B. PC > Smartphone > Pumpenelektronik oder PC > Speicherkarte/ Smartcard o.ä. > Pumpenelektronik).

Das Handgerät kann ein tragbarer Computer wie ein Laptop oder ein Tablet-PC, ein Smartphone oder ein speziell für die Pumpenkonfiguration vorgesehenes Gerät sein. Der Konfigurationsassistent ist als Software oder App auf den Computer, den Tablet-PC oder das Smartphone ladbar. Die Kommunikationsverbindung zwischen Handgerät und Pumpenelektronik kann kabelgebunden oder funkbasiert sein. Eine funkbasierte Verbindung kann beispielsweise nach einem Standard für die FuncKommunikation wie Bluetooth, WLAN, EnOcean, NFC oder dergleichen erfolgen.

Es sei angemerkt, dass die Anzeige und das zumindest eine Eingabemittel auch bei dem Handgerät zu einer integrierten Einheit zusammengefasst sein und somit ein berührungssensitives Display bilden können, wie es bei Smartphones, Tablets aber auch schon bei Laptops üblich ist. Gemäß einer anderen Variante können Anzeige und Eingabemittel dennoch voneinander baulich separate Komponenten bilden, insbesondere im Hinblick auf das speziell für die Pumpenkonfiguration vorgesehene Gerät.

So kann es sich bei dem oder den Eingabemitteln beispielsweise um eine drückbare Bedientaste oder einen drehbaren Bedienknopf handeln. Vorzugsweise kann es sich um einen dreh- und drückbaren Bedienkopf handeln. Bei diesem kann dann durch Drehen eine Anlagenart, Regelungsart, Pumpenanwendung oder Sondereinstellung angewählt und durch Drücken ausgewählt werden. Gemäß einer Weiterbildung kann die Bedientaste oder der Bedienknopf als Navigationstaster oder Navigationsknopf ausgebildet sein, so dass eine Navigation auf der Anzeige in vier Himmelsrichtungen möglich ist. Im Falle eines Laptops kann das Eingabemittel auch eine Computermaus oder ein Trackpad sein.

In einer Ausführungsform kann der Konfigurationsassistent als Software oder App auf dem Computer, dem Tablet-PC oder dem Smartphone auch offline lauffähig sein, so dass die erforderlichen Eingaben und Auswahlen auch ohne Kommunikationsverbindung zwischen Handgerät und Pumpe vorgenommen werden können. Die Übertragung der erzeugten Informationen auf die Pumpenelektronik kann zu einem späteren Zeitpunkt erfolgen, wenn die Kommunikationsverbindung zur Verfügung steht.

In einer weiteren Ausführungsform kann der Konfigurationsassistent als Software auf einem Computer ohne Kommunikationsschnittstelle zur Pumpenelektronik laufen, wobei die (im Büro) erzeugten Informationen auf einem NFC-Tag gespeichert werden. Der NFC Tag kann zur Pumpe (auf der Baustelle) transportiert werden wo die Information vom NFC-Lesegerät in der Pumpenelektronik gelesen wird.

Weitere Merkmale und Vorteile des erfindungsgemäßen Verfahrens, des Kreiselpumpenaggregats sowie der Anordnung aus diesem und einem Handgerät werden nachfolgend anhand von Ausführungsbeispielen und der beigefügten Figuren näher erläutert.

Es zeigen:
- Fig. 1:: eine Prinzipdarstellung eines Kreiselpumpenaggregats
- Fig. 2:: eine Prinzipdarstellung einer hydraulischen Anlage mit Kreiselpumpenaggregat
- Fig. 3:: Funktionseinheiten der Pumpenelektronik
- Fig. 4:: Komponenten des Konfigurationsassistenten
- Fig. 5:: Funktionseinheiten eines Handgeräts samt Pumpenelektronik
- Fig. 6:: eine Veranschaulichung von Zuordnungen von Regelungsarten zu Anlagenarten
- Fig. 7:: eine Veranschaulichung von Zuordnungen von Regelungsarten zu Anlagenarten anhand konkreter Beispiele
- Fig. 8:: durch den Konfigurationsassistenten auf der Anzeige bewirkte Darstellungen aufgrund der Zuordnungen und Auswahl der Anlagenart
- Fig. 9:: durch den Konfigurationsassistenten auf der Anzeige bewirkte Darstellungen aufgrund der Zuordnungen und Auswahl der Pumpenanwendung und Anlagenart
- Fig. 10:: durch den Konfigurationsassistenten auf der Anzeige bewirkte Darstellungen aufgrund der Zuordnungen und Auswahl der Pumpenanwendung und Anlagenart anhand Praxisbeispiel
- Fig. 11:: eine Darstellung auf der Anzeige nach der Konfiguration
- Fig. 12:: eine Veranschaulichung von Zuordnungen von Sondereinstellungen zu Regelungsarten
- Fig. 13:: Übersicht beispielhafter Zuordnungen von Sondereinstellung zu Kombinationen aus Anlagenart und Regelungsart
- Fig. 14:: ein Ablaufdiagramm des Konfigurationsverfahrens

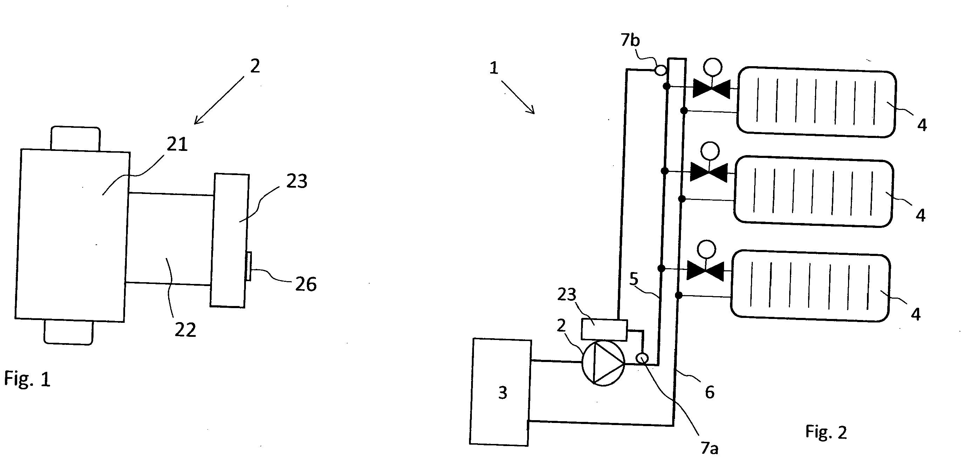

Fig. 1 zeigt eine schematische Darstellung eines Pumpenaggregats 2, das in einer Vielzahl unterschiedlicher Anlagenarten einsetzbar ist und in einer Vielzahl verschiedener Regelungsarten betrieben werden kann. Das Kreiselpumpenaggregat 2 ist hier durch die bauliche Vereinigung einer Pumpeneinheit 21, eines diese antreibenden Elektromotors 22 sowie einer Pumpenelektronik 23 gebildet.

Die Pumpeneinheit 21 umfasst ein Pumpengehäuse mit Stutzen zum Anschluss des Gehäuses an Rohrleitungen einer hydraulischen Anlage 1, siehe Fig. 2, sowie mit einer Pumpenkammer, innerhalb der sich ein Laufrad befindet, das auf einer vom Elektromotor angetriebenen Pumpenwelle sitzt. Gegebenenfalls kann die Pumpenwelle gleichzeitig die Motorwelle bilden. Der Elektromotor 22 ist an das Pumpengehäuse angeflanscht. Die Pumpenelektronik 23 ist in einem Gehäuse untergebracht, dass in dieser beispielhaften Ausführungsvariante des Kreiselpumpenaggregats 2 in Fig. 1 an eine axiale Stirnseite des Elektromotors 22 montiert ist. Die Pumpenelektronik 23 kann jedoch auch an einer beliebigen anderen Stelle am Motorgehäuse des Elektromotors 22 angeordnet sein.

Fig. 2 zeigt eine vereinfachte Darstellung einer hydraulischen Anlage 1, die hier in Form einer Zentralheizungsanlage mit Radiatoren/Heizkörpern 4 als Verbrauchern ausgeführt ist. Die Anlage 1 umfasst eine Heizquelle 3, eine Vorlaufleitung 5 von der Heizquelle 3 zu den Verbrauchern 4 sowie eine Rücklaufleitung 6 von den Verbrauchern 4 zur Heizquelle 3. In der Vorlaufleitung 5 ist ein Kreiselpumpenaggregat 2 angeordnet, um das Heizmedium von der Heizquelle 3 zu den Verbrauchern 4 zu fördern. Am Pumpenaggregat 2 ist ein Sensor 7a, hier in Gestalt eines Differenzdrucksensors vorhanden, der mit der Pumpenelektronik 23 verbunden ist und den Differenzdruck über dem Pumpenaggregat 2 misst. Der gemessene Differenzdruck wird hier für eine Druckregelung verwendet. Zusätzlich ist ein externer Drucksensor 7b mit der Pumpenelektronik 23 verbunden, der den Druck an einem Schlechtpunkt der hydraulischen Anlage 1 misst.

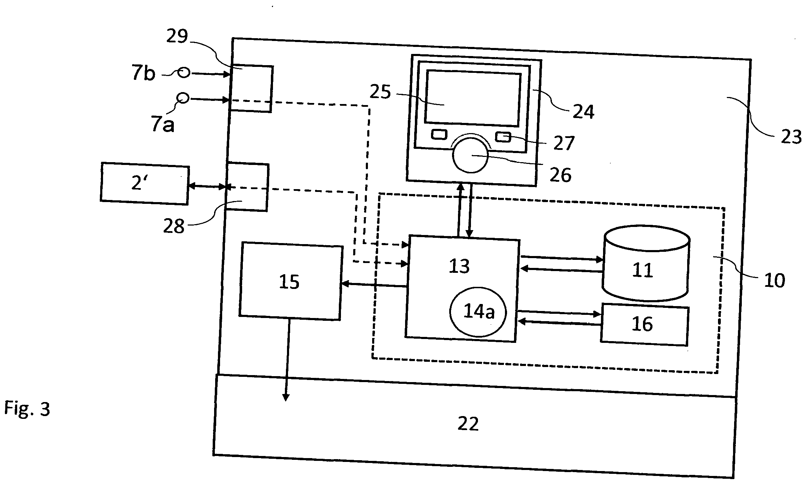

In Fig. 3 ist eine schematische Darstellung verschiedener Funktionseinheiten der Pumpenelektronik 23 dargestellt. Sie umfasst eine Steuereinheit 13, einen ersten und einen zweiten nicht flüchtigen Speicher 11, 16, eine Pumpenregelung 15 sowie eine Anzeige- und Bedieneinheit 24 mit einer Anzeige 25 und Eingabemitteln 26, 27. Die Steuereinheit 13 ist beispielsweise durch einen Mikroprozessor oder Mikrocontroller gebildet und kann auf die Speicher 11, 16 zugreifen, die wiederum bei einem Zugriff entsprechende Daten zurück liefern. Der erste Speicher 11 kann eine Datenbank mit Reglerkonfigurationsdaten enthalten. Der zweite Speicher 16 kann ein Programm 14a zur Ausführung des erfindungsgemäßen Verfahrens enthalten. Die Anzeige- und Bedieneinheit 24 ist ebenfalls mit der Steuereinheit 13 bidirektional verbunden. Die Steuereinheit 13 steuert die Darstellung auf der Anzeige 25 und nimmt Steuerbefehle entgegen, die durch die Eingabemittel 26, 27 von einer Bedienperson an der Anzeige- und Bedieneinheit 24 erfolgen.

Die Pumpenelektronik 23 umfasst des Weiteren eine Kommunikationsschnittstelle 28, beispielsweise in Gestalt eines steckbaren Moduls, das die Pumpenelektronik 23 durch Bus-Schnittstellen erweitert und die Kommunikation mit zumindest einem anderen Kreiselpumpenaggregat 2' ermöglicht.

Des Weiteren umfasst die Pumpenelektronik 23 Anschlussklemmen 29 für Sensoren 7a, 7b.

In der Darstellung gemäß Fig. 3 ist das Programm 14a in die Steuereinheit 13 geladen. Das Programm 14a realisiert einen Teil des erfindungsgemäßen Konfigurationsassistenten 14. Dieser Teil des Konfigurationsassistenten ist durch Programmmittel, d.h. Software gebildet, die/ der bei der Abarbeitung auf der Steuereinheit 13 das erfindungsgemäße Konfigurationsverfahren ausführen.

Der durch die Programmmittel/ Software gebildete Teil des Konfigurationsassistenten kann in einem weiteren nicht flüchtigen Speicher 16 gespeichert sein und wird bei Bedarf von dort auf die Steuereinheit 13 zur entsprechenden Ausführung geladen.

Der Konfigurationsassistent 14 gibt vor, was die Steuereinheit 13 auf der Anzeige 25 darstellen soll und wie auf eine Eingabe der Bedienperson durch die Eingabemittel 26, 27 zu reagieren ist. Der Konfigurationsassistent 14 dient der Einstellung einer anwendungsspezifischen Regelungsfunktion am Kreispumpenaggregat 2, um dieses optimal an die hydraulische Anlage 1, in der sich das Kreiselpumpenaggregat 2 befindet, anzupassen.

Zu diesem Zweck ist der Konfigurationsassistent 14 eingerichtet, der Bedienperson auf der Anzeige 25 eine Anzahl der Anlagenarten, in der das Pumpenaggregat 2 einsetzbar ist, und eine Anzahl der Regelungsarten, in denen das Pumpenaggregat 2 betreibbar ist, darzustellen und auf eine Auswahl einer Anlagenart und eine Auswahl einer Regelungsart durch die Bedienperson zu warten. In Abhängigkeit der Kombination aus angegebener Anlagenart und angegebener Regelungsart liefert der Konfigurationsassistent 14 dann eine dieser Kombination zugeordnete Reglerkonfiguration 12. Diese umfasst zum einen einen Regelungsalgorithmus 19 und zum anderen einen Datensatz mit Reglerkonfigurationsdaten 38, der in dem Speicher 11 gespeichert ist und geladen werden kann. Die Reglerkonfiguration 12 wird dann in der Pumpenregelung 15 eingestellt und entsprechend zur Regelung des Kreiselpumpenaggregats 2 bzw. zur Ansteuerung des Elektromotors 22 verwendet.

Die Eingabemittel 26, 27 sind hier beispielhaft durch einen dreh-drückbaren Bedienknopf 26 sowie durch zwei Bedientasten 27 dargestellt. Mit dem Bedienkopf 26 kann durch Drehen eine Anwahl, durch Drücken eine Auswahl einer der Anlagenarten, der Regelungsarten oder einer sonstigen Auswahlmöglichkeit auf der Anzeige 25 erfolgen. Mit der Bedientaste 27 kann beispielsweise eine "zurück" oder "Abbruch"-Funktion im Konfigurationsassistenten 14 ausgeführt werden.

Der Konfigurationsassistent 14 umfasst eine vordefinierte Zuordnung 17a, bei der jede der Anlagenarten zumindest eine der Regelungsarten zugeordnet ist, und jede in der Zuordnung 17a enthaltene Kombination aus einer Anlagenart und einer Regelungsart mit einer der Reglerkonfigurationen 12 verknüpft ist. Somit ist durch die Angabe einer Anlagenart und einer Regelungsart eine anwendungsspezifische Reglerkonfiguration 12 festgelegt und kann vom Konfigurationsassistenten 14 aus der Datenbank 11 geladen und in der Pumpenregelung 15 entsprechend eingestellt werden.

Die Hardwarekomponenten, die zur Ausführung des Konfigurationsassistenten 14 erforderlich sind und miteinander zusammenwirken, bilden eine Konfigurationseinrichtung, die in Figur 3 mit der Bezugsziffer 10 gekennzeichnet ist. Diese Hardwarekomponenten sind zumindest durch den die Steuereinheit 13 bildenden Mikroprozessor oder Mikrocontroller sowie durch den die Datenbank bereitstellenden Speicher 11 gebildet.

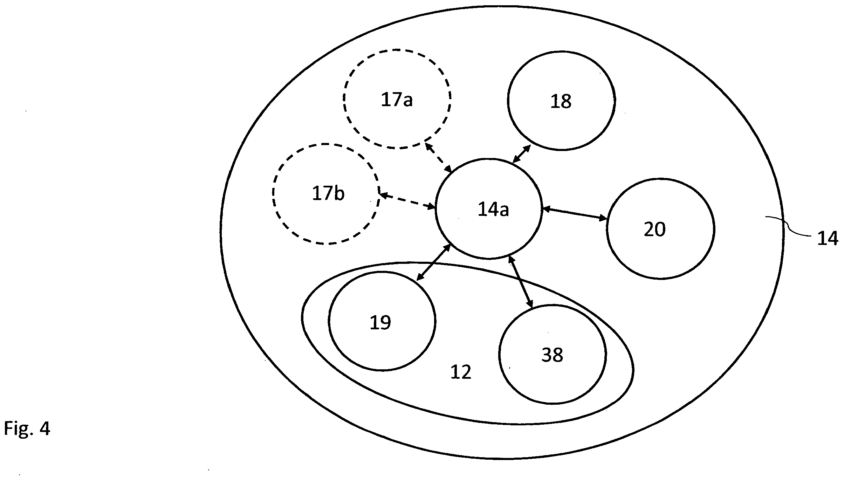

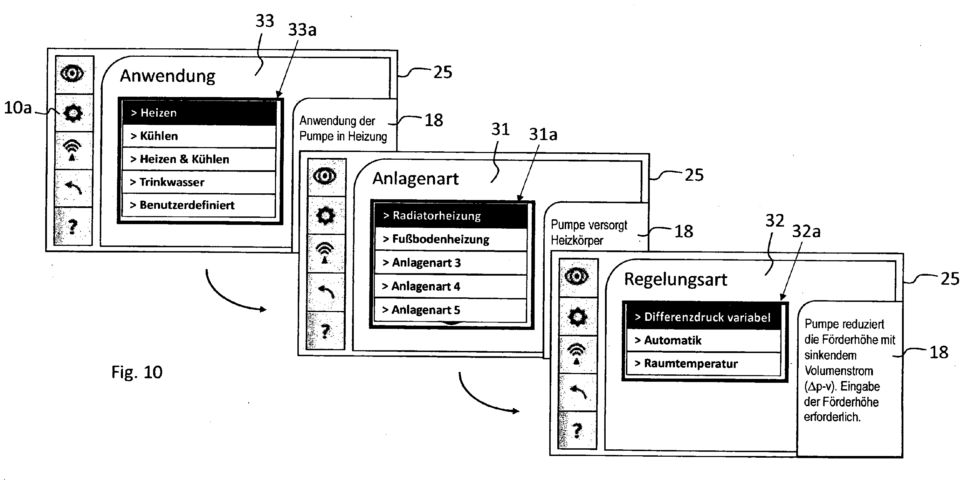

Der Konfigurationsassistent 14 ist demgegenüber durch Software gebildet, nämlich zumindest durch die ausführbaren Programmmittel 14a und die Reglerkonfigurationen 12. Die Reglerkonfigurationen 12 bilden somit einen weiteren Bestandteil des Konfigurationsassistenten. Ein anderer Bestandteil ist eine Sammlung von Erklärungstexten 18, siehe Fig. 10, die der Bedienperson auf der Anzeige 25 als Hilfestellung bei der Auswahl der Anlagenart, der Regelungsart und ggf. weiterer Einstellungs- und Auswahlmöglichkeiten einzeln dargestellt werden. Diese Erklärungstexten 18 können ebenfalls in dem Speicher 11 oder in einem anderen Speicher enthalten sein. Figur 4 veranschaulicht die einzelnen Bestandteile des Konfigurationsassistenten 14.

Die Programmmittel 14a bilden hier die zentrale Komponente des Konfigurationsassistenten 14. Die erfindungsgemäße Zuordnung 17a, die die verschiedenen Kombinationen von Anlagenart und Regelungsart enthält, sowie eine weitere Zuordnung 17b der Anlagenarten zu Pumpenanwendungen, sind in den Programmmittel 14a integriert, können aber als Wissensbasis in der Gestalt einer Tabelle bzw. Matrix als eigenständiger Bestandteil des Konfigurationsassistenten 14 betrachtet werden, und sind deshalb separat zu den Programmmitteln 14a in Figur 4 dargestellt. Des Weiteren bilden Sonderfunktionen 20 einen Teil der Konfigurationsassistenten 14, die die Regelungsalgorithmen 19 ergänzen.

Alternativ zu der Darstellung in Fig. 3 kann die Anzeige- und Bedieneinheit 24 eine zur Pumpenelektronik 23 separate Baueinheit sein, d.h. außerhalb respektive extern zur Pumpenelektronik 23 angeordnet und über eine Kommunikationsverbindung mit dieser verbunden sein. Die Kommunikationsverbindung kann beispielsweise durch ein Kabel oder durch eine Funkverbindung via Bluetooth, WLAN, EnOcean, NFC oder dergleichen erfolgen.

Die in Fig. 3 gezeigte Anordnung aus Funktionseinheiten betrifft eine Ausführungsvariante der Erfindung, bei der der Konfigurationsassistent 14 Teil der Pumpenelektronik 23 ist, welche wiederum Teil des Kreiselpumpenaggregats 2 ist. Eine andere Ausführungsvariante ist in Figur 5 gezeigt.

Figur 5 zeigt eine Ausführungsvariante, bei der der erfindungsgemäße Konfigurationsassistent 14 extern zur Pumpenelektronik 23, nämlich in einem Handgerät 30 vorhanden ist, welches zur Konfiguration des Kreiselpumpenaggregats 2 dient. Im Wesentlichen sind hier dieselben Komponenten wie der bei der ersten Ausführungsvariante in Figur 3 dargestellt. So umfasst das Handgerät 30 eine Steuereinheit 13, beispielsweise einen Mikroprozessor oder Mikrocontroller, eine Anzeige- und Bedieneinheit 24 und nicht-flüchtige Speicher 11, 16. Die Steuereinheit 13 steuert die Darstellung auf eine Anzeige 25 der Anzeige- und Bedieneinheit 24. Diese meldet ferner Eingabebefehle von einem Eingabemittel 26 zurück an die Steuereinheit 13. In die Steuereinheit 13 ist das aus den Programmmitteln 14a des Konfigurationsassistenten 14 gebildete Programm aus dem Speicher 16 geladen und wird dort abgearbeitet.

Die Programmmittel 14a umfassen auch hier die vorgenannten Zuordnung 17a, die eine Vielzahl von Kombinationen unter den Regelungsarten und Anlagenarten enthält. Die diesen Kombinationen zugeordneten Reglerkonfigurationen 12 sind wieder als Datensätze einer Datenbank in dem Speicher 11 hinterlegt und werden bei Bedarf von den Programmmitteln 14a aus dem Speicher 11 geladen, sobald eine entsprechende Reglerkonfiguration 12 aufgrund der Angabe einer Anlagenart und einer Regelungsart durch die Bedienperson feststeht. Die entsprechende Reglerkonfiguration 12 wird dann an die Pumpenregelung 15 der extern zum Handgerät 30 befindlichen Pumpenelektronik 23 übertragen und von der Pumpenelektronik 23 entsprechend eingestellt. Die Übertragung kann hier kabelgebunden oder per Funk erfolgen, wobei die Funkkommunikation mittels Bluetooth, WLAN, EnOcean, NFC oder einem beliebigen anderen Standard erfolgen kann.

Figuren 6 und 7 veranschaulichen die im Konfigurationsassistenten 14 vordefinierte Zuordnung 17a der jeweiligen Regelungsarten zu den Anlagenarten einerseits sowie auch die vordefinierte Zuordnung 17b der Anlagenarten zu den Pumpenanwendungen in Gestalt von Tabellen. Dabei veranschaulicht Figur 6 das grundlegende Konzept, Figur 7 implementiert dieses Konzept anhand konkreten Anlagenarten, Regelungsarten und Pumpenanwendungen.

In Figur 6 sind fünf verschiedene Anlagenarten A1, A2, A3, A4, A5 sowie fünf beispielhafte Regelungsarten B1, B2, B3, B4, B5 in einer Tabelle gegenübergestellt, so dass Kombinationen aus jeweils einer der Anlagenarten A1-A5 und einer der Regelungsarten B1-B5 gebildet sind, wobei jede Kombination durch ein Feld der Tabelle gegeben ist. Jedes Tabellenfeld enthält entweder ein Kreuz oder einen Punkt, wobei ein Kreuz zum Ausdruck bringt, dass eine Zuordnung der entsprechenden Regelungsart zu der entsprechenden Anlagenart nicht bevorzugt ist. Demgegenüber ist eine solche Zuordnung bei den Feldern gegeben, in denen ein Punkt vorhanden ist. Ein Punkt bringt somit zum Ausdruck, dass für die entsprechende Kombination aus Anlagenart und Regelungsart eine Reglerkonfiguration 12 sinnvoll ist. Demgegenüber bedeutet das Kreuz, dass keine bevorzugte Zuordnung und keine sinnvolle Reglerkonfiguration 12 existiert, d.h. die entsprechende Kombination eine gesperrte Kombination 12a ist.

Der Tabelle kann somit entnommen werden, dass der Anlage 1 die Regelungsarten 2 und 5 zugeordnet sind, der Anlage 2 sind wiederum die Regelungsarten 2, 3 und 4 zugeordnet. Anlage 3 ist die Regelungsart 1 zugeordnet und so weiter.

Da das Kreiselpumpenaggregat 2 für eine Vielzahl verschiedener Anlagenarten eingesetzt werden kann, die jeweils einer bestimmten Pumpenanwendung C1, C2, C3 zugeordnet werden können, ist eine solche Zuordnung in Figur 6 ebenfalls vorgenommen und dadurch erkennbar, dass zu jeder Pumpenanwendung C1, C2, C3 eine eigene Zuordnungstabelle mit Kombinationen aus Anlagenarten und Regelungsarten existiert. Jede dieser anwendungsspezifischen Zuordnungstabellen definiert für sich mittels gesperrten Zuordnungen 12a und freien Zuordnungen, die jeweils eine Reglerkonfiguration 12 haben, welche Regelungsart mit welcher Anlagenart eine sinnvolle Kombination darstellt.

Die abstrakte Tabelle oder dreidimensionale Matrix in Figur 6 ist in Figur 7 teilweise konkretisiert. Die Anlagenarten können z.B. sein: Eine Radiatorheizung, eine Fußbodenheizung, eine Deckenheizung, ein Lufterhitzer (Gebläsekonvektor als gebläseunterstützter Wasser/Luft Wärmeübertrager im Raum zum Heizen) eine Heizungsanlage mit hydraulischer Weiche, eine Heizungsanlage mit Wärmetauscher, eine Deckenkühlung, eine Fußbodenkühlung, ein Luft-Klimagerät (Gebläsekonvektor als gebläseunterstützter Wasser-Luft Wärmeübertrager im Raum zum Kühlen), eine Kühlanlage mit hydraulischer Weiche, eine Kühlanlage mit Wärmetauscher, eine Trinkwasserzirkulation oder ein Trinkwasserspeichersystem.

Die Anlagenarten Radiatorheizung, Fußbodenheizung, Deckenheizung, Lufterhitzer, Heizungsanlage mit hydraulischer Weiche und Heizungsanlage mit Wärmetauscher sind der Pumpenanwendung "Heizen" zugeordnet. Demgegenüber sind die Anlagenarten Deckenkühlung, Fußbodenkühlung, Luft-Klimagerät, Kühlanlage mit hydraulischer Weiche und Kühlanlage mit Wärmetauscher der Pumpenanwendung "Kühlen" zugeordnet. Schließlich sind die Anlagenarten Trinkwasserzirkulation und Trinkwasserspeicher der Pumpenanwendung "Trinkwasser" zugeordnet. Diese Pumpenanwendung-Anlagenart Zuordnung ist mit der Bezugsziffer 17b in Figur 7 gekennzeichnet.

Als Regelungsarten sind in Figur 7 eine Konstantdruckregelung, eine Proportionaldruckregelung, eine Schlechtpunktregelung, eine Automatikregelung, eine Konstantstromregelung, eine Summenstromregelung, eine Konstanttemperaturregelung, eine Differenztemperaturregelung und eine Konstantdrehzahlregelung angegeben.

Bei der Konstantdruckregelung (Δp-c) hält die Pumpe 2 die Förderhöhe konstant auf einem vorgegebenen Sollwert. Bei der Proportionaldruckregelung (Δp-V) regelt die Pumpe 2 die Förderhöhe in Abhängigkeit des Volumenstroms entlang einer linearen Regelkurve, die durch einen vorgegebenen Sollwert definiert ist.

Bei der Schlechtpunktregelung (Δp-c ext) hält die Pumpe 2 die Förderhöhe an einem ungünstigen Punkt der hydraulischen Anlage 1 konstant auf einen vorgegebenen Sollwert. Z.B. kann der externe Sensor 7b in Fig. 2 für die Regelung einen Messwert für den Druck am Schlechtpunkt geben.

Bei der Automatikregelung passt die Pumpe 2 ihre Leistung automatisch und ohne Sollwertvorgabe an den Bedarf der Anlage 1 an. Solche Verfahren sind beispielsweise in den Patentanmeldungen DE 102011012211 A1 oder DE 102014018020 A1 beschrieben.

Bei der Konstantstromregelung (cQ) hält die Pumpe 2 den Volumenstrom unabhängig von den Druckverhältnissen konstant auf einem vorgegebenen Sollwert.

Bei der Summenvolumenstromregelung (∑Q) passt sich die Pumpe 2 in der Funktion einer Zubringerpumpe oder Primärkreispumpe ständig dem veränderlichen Bedarf aller Strangpumpen (Sekundärpumpen oder Verbraucherpumpen) an. Sie wird auf die Summe der Ströme der Strangpumpen geregelt. Ein solches Verfahren ist beispielsweise in der deutschen Patentanmeldung DE 102015014378.6 beschrieben.

Bei der Konstanttemperaturregelung (cT) regelt die Pumpe 2 die Förderleistung in Abhängigkeit einer Zieltemperatur, um diese konstant zu halten. Je nach Anwendung, in der sich die Pumpe 2 befindet, kann diese Temperatur zum Beispiel eine Raumtemperatur (Hallentemperatur) oder eine Medientemperatur wie die Vorlauf oder Rücklauftemperatur sein.

In der Regelungsart Differenztemperaturregelung (ΔT-c) regelt die Pumpe 2 auf eine konstante Differenztemperatur und hält diese konstant. Auch die Implementierung dieser Regelungsart ist abhängig von der konkreten Verwendung der Pumpe. So kann beispielsweise auf die Differenz zwischen primär- und sekundärseitigem Vorlauf an einer hydraulischen Weiche oder einem Wärmetauscher geregelt werden, alternativ auf die Differenz zwischen primär- und sekundärseitigem Rücklauf. Weiter alternativ kann auch so geregelt werden, dass die Differenz zwischen Vor- und Rücklauf konstant gehalten wird. Dies ist zum Beispiel bei einem Trinkwasserspeicher mit einer Speicherladepumpe geeignet. Bei der Konstantdrehzahlregelung (n-c) hält die Pumpe 2 ihre Drehzahl unabhängig von veränderlichen Druckverhältnissen und Volumenstromverhältnissen konstant.

Jeder der Anlagenarten ist nun zumindest eine der genannten Regelungsarten zugeordnet. Beispielsweise sind der Anlagenart "Radiatorheizung" die Regelungsarten Proportionaldruckregelung, Automatikregelung und Konstanttemperaturregelung zugeordnet. Der Anlagenart 10 sind die Regelungsarten "Summenstromregelung", "Konstanttemperaturregelung" und "Differenztemperaturregelung" zugeordnet.

Die Zuordnungen zwischen Anlagenart und Regelungsart sind mit der Bezugsziffer 17a gekennzeichnet. Die Zuordnungstabellen für die Pumpenanwendungen "Heizen", "Kühlen" und "Trinkwasser" sind hier im Gegensatz zur Figur 6 nicht hintereinander, sondern nebeneinander dargestellt. Innerhalb der Zuordnungstabellen bedeuten Tabellenfelder mit Kreuzen wieder gesperrte Zuordnungen 12a, d.h. Zuordnungen, die nicht existieren. Demgegenüber sind existierende Zuordnungen, denen jeweils eine Reglerkonfiguration 12 zugeordnet ist, durch einen Punkt im entsprechenden Tabellenfeld gekennzeichnet.

Zulässige Zuordnungen sind im Hinblick darauf gebildet, welche Regelungsart bei welcher Anlagenart technisch Sinn macht und den größten Nutzen, insbesondere hinsichtlich einer möglichen Energieeinsparung mit sich bringt. Demgegenüber sind solche Kombinationsmöglichkeiten, die technisch keinen oder wenig Sinn machen oder insbesondere nachteilig sind, beispielsweise im Hinblick auf potentielle Energieeinsparmöglichkeiten, gesperrte Zuordnungen 12a.

Da der Fall vorliegen kann, dass eine Bedienperson eine bestimmte Regelungsart einstellen möchte, die jedoch als gesperrte Zuordnung 12a im Konfigurationsassistenten definiert ist, umfasst jede Pumpenanwendung neben den entsprechenden Anlagenarten eine benutzerdefinierte Einstellungsmöglichkeit in Gestalt eine Regelungsartenliste 39, innerhalb der sämtliche Regelungsarten verfügbar, insbesondere alle Regelungsarten zur Auswahl stehen.

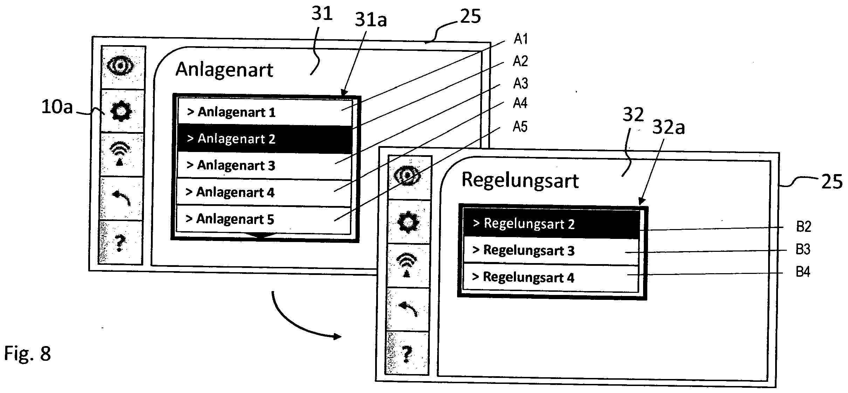

Figur 8 zeigt Darstellungen auf der Anzeige 25, die während der Durchführung des erfindungsgemäßen Konfigurationsverfahrens gesteuert vom Konfigurationsassistenten 14 angezeigt werden, wobei die Darstellungen der beispielhaften Zuordnung gemäß Fig. 6 folgen. In der links auf der Anzeige 25 dargestellten Piktogrammspalte ist anhand des grafisch hervorgehobenen Piktogramms 10a für den Konfigurationsassistenten 14 zu erkennen, dass der Konfigurationsassistent 14 aktiviert ist.

Wie Figur 8 veranschaulicht, wird auf der Anzeige 25 zunächst ein erstes Dialogfenster 31 und in diesem eine Darstellung 31a der hydraulischen Anlagenarten A1-A5 angezeigt, in denen das Pumpenaggregat 2 betrieben werden kann. Die Darstellung 31a erfolgt hier in Gestalt einer Liste, wobei aber auch grafische Repräsentationen der Anlagenarten A1-A5 möglich sind, beispielsweise in der Art von Bildern oder Piktogrammen, wobei jede Anlagenart durch ein Piktogramm oder Bild repräsentiert sein kann.

Nach der Darstellung der hydraulischen Anlagenarten A1-A5 wartet der Konfigurationsassistent 14 auf eine Auswahl einer der dargestellten Anlagenarten A1-A5 durch die Bedienperson. Diese nimmt dann mit Hilfe des Eingabemittels 26 eine entsprechende Eingabe vor, wobei sie hier beispielhaft Anlagenart 2 (A2) anwählt und diese auswählt. Die Darstellung auf der Anzeige 25 ändert sich sodann.

Gemäß der vordefinierten Zuordnung 17a wird nun in Abhängigkeit der ausgewählten Anlagenart A2 auf der Anzeige 25 in einem zweiten Dialogfenster 32 eine Darstellung 32a derjenigen Regelungsarten angezeigt, die der ausgewählten Anlagenart A2 zugeordnet sind. Dies sind gemäß der Zuordnung 17a in Fig. 6 die Regelungsarten B2, B3 und B4.

Die Darstellung 32a erfolgt auch hier in Gestalt einer Liste, wobei aber ebenfalls grafische Repräsentationen der Regelungsarten B1-B5 möglich sind, beispielsweise in der Art von Bildern oder Piktogrammen, wobei jede Regelungsart durch ein Piktogramm oder Bild repräsentiert sein kann.

Nach der Darstellung der Regelungsarten B1-B5 wartet der Konfigurationsassistent 14 auf die Auswahl einer der dargestellten Regelungsarten durch die Bedienperson. Diese nimmt dann mit Hilfe des Eingabemittels 26 eine entsprechende Eingabe vor, wobei sie hier beispielhaft Regelungsart 2 (B2) anwählt und diese auswählt. Infolge dieser Auswahl wird nun vom Konfigurationsassistenten die mit der Kombination aus ausgewählter Regelungsart B2 und ausgewählter Anlagenart A2 verknüpfte Reglerkonfiguration 12 aus der Datenbank 11 geladen und am Kreiselpumpenaggregat 2 genauer gesagt in der Pumpenregelung 15 eingestellt.

Wäre der ausgewählten Anlagenart A2 nur eine einzige Regelungsart zugeordnet, so bräuchte keine Auswahl der Regelungsart durch die Bedienperson zu erfolgen, da es keine Alternative gibt. In diesem Fall kann automatisch direkt die mit der Kombination aus dieser einen Regelungsart und ausgewählten Anlagenart verknüpfte Reglerkonfiguration 12 am Kreiselpumpenaggregat 2 bzw. in der Pumpenregelung 15 eingestellt werden.

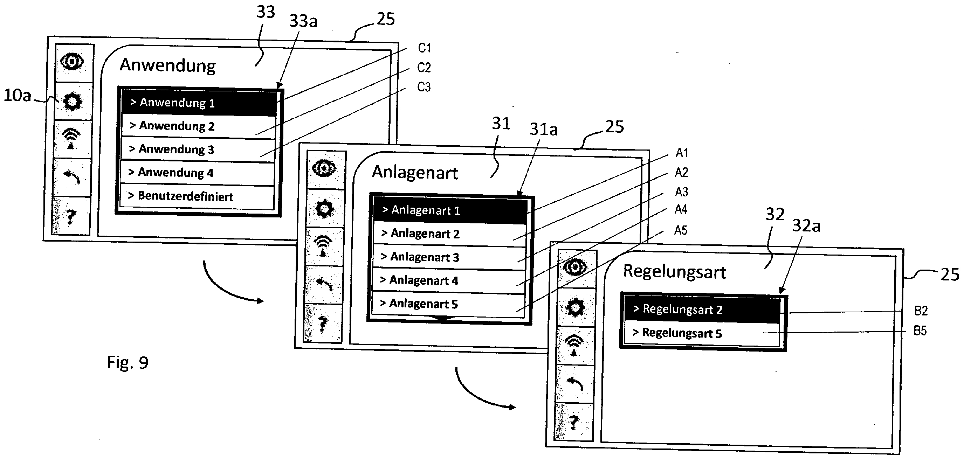

Fig. 9 zeigt eine Erweiterung des erfindungsgemäßen Konfigurationsverfahrens durch die Angabe einer Pumpenanwendung C1, C2, C3 vor der Auswahl der Anlagenart. Die Liste 32a der darzustellenden Anlagenarten wird somit reduziert.

Wie Fig. 9 veranschaulicht, wird vor der Darstellung 31a der Anlagenarten vom Konfigurationsassistenten 14 auf der Anzeige 25 in einem dritten Dialogfenster 33 eine Darstellung 33a von Pumpenanwendungen C1-C3 angezeigt und auf eine Auswahl einer dieser Pumpenanwendungen C1-C3 durch die Bedienperson gewartet. Diese nimmt dann mit Hilfe des Eingabemittels 26 eine entsprechende Eingabe vor, wobei sie hier beispielhaft Anwendung 1 (C1) anwählt und diese auswählt.

Die Darstellung auf der Anzeige 25 ändert sich sodann und es werden gemäß der vordefinierten Zuordnung 17b, bei der jeder der Pumpenanwendungen C1-C3 zumindest eine der Anlagenarten A1-A5 zugeordnet ist, in Abhängigkeit der ausgewählten Pumpenanwendung C1 nur diejenigen Anlagenarten zur Auswahl dargestellt, die der ausgewählten Pumpenanwendung C1 zugeordnet sind. Im Falle des hier gezeigten Beispiels, sind dies die Anlagenarten A1 bis A5, wie sie in Fig. 6 gezeigt sind.

Das Konfigurationsverfahren setzt sich dann, wie in Bezug auf Fig. 8 erläutert, fort, wobei in Fig. 9 jedoch anstelle der Anlagenart 2 (A2) im ersten Dialogfenster 31 die Anlagenart 1 (A1) ausgewählt ist bzw. wird und aufgrund dessen in dem zweiten Dialogfenster 32 nur die beiden Regelungsarten 2 und 5 (B2, B5) dargestellt werden.

Die Zuordnung der Regelungsart 2 zur ausgewählten Anlagenart 1 ist, wie in Fig. 6 gezeigt, als eine Voreinstellung 12b, d.h. eine präferierte Zuordnung. Um diese Vorauswahl auf der Anzeige 25 darzustellen, ist Regelungsart 2 farblich hervorgehoben oder durch eine Kontrastumkehr gekennzeichnet.

Die Bedienperson wählt nun mittels des Eingabemittels 26 Regelungsart 2 oder 5 aus, so dass die einzustellende Reglerkonfiguration 12 feststeht. Es ist die mit der Kombination aus Anlagenart 1 und Regelungsart 2 verknüpfte Reglerkonfiguration 12.

Figur 10 veranschaulicht nunmehr das erfindungsgemäße Konfigurationsverfahren anhand der konkreten Pumpenanwendungen, Anlagenarten und Regelungsarten gemäß der Zuordnungen 17a, 17a in Figur 7.

Als Pumpenanwendungen sind hier die Anwendungen "Heizen", "Kühlen", "Heizen und Kühlen", "Trinkwasser", sowie eine benutzerdefinierte Anwendung im dritten Dialogfenster 33 als Liste 33a dargestellt. Der Konfigurationsassistent 14 wartet auf eine Auswahl, die hier durch die Bedienperson in Gestalt der Anwendung "Heizen" erfolgt. Im ersten Dialogfenster 31 werden daraufhin die der Anwendung "Heizen" zugeordneten Anlagenarten als Liste 31a dargestellt. Dies sind gemäß der Zuordnung 17b die Anlagenarten "Radiatorheizung", "Fußbodenheizung", "Anlagenart 3", "Anlagenart 4", "Anlagenart 5" und "Anlagenart 6", wobei die letzte Anlagenart in der Liste 31a nicht mehr innerhalb des dargestellten Dialogfensters 31 sichtbar ist, vielmehr erst durch Scrollen nach unten innerhalb des ersten Dialogfensters 31 sichtbar wird. Dieses Scrollen kann durch Drehen des Eingabemittels 26 erfolgen.

Eine Auswahl kann überdies bei jeder der hier erläuterten Varianten durch Drücken des Eingabemittels 26 erfolgen.

Im Beispielfall wird die Anlagenart "Radiatorheizung" ausgewählt. Ihr zugeordnet sind gemäß der Zuordnung 17a in Fig. 7 die Regelungsarten "variabler Differenzdruck", "Automatikregelung" und "Raumtemperaturregelung", so dass diese Regelungsarten im zweiten Dialogfenster 32 als Liste 32a angezeigt werden. Durch die insgesamt erfolgte Auswahl einer Regelungsart und einer Anlagenart ist die mit dieser Kombination verknüpfte Reglerkonfiguration 12 festgelegt und kann vom Konfigurationsassistenten 14 somit aus der Datenbank 11 geladen und in der Pumpenregelung 15 eingestellt werden.

In Fig. 10 ist des Weiteren gezeigt, dass zu der ausgewählten Pumpenanwendung, zu der ausgewählten Anlagenart sowie zu der ausgewählten Regelungsart jeweils ein Erklärungstext 18 dargestellt ist, hier innerhalb eines separaten Fensters. Der Erklärungstext 18 informiert über die Bedeutung, Wirkung und/ oder die notwendigen Voraussetzungen der entsprechenden Auswahlmöglichkeit. Erfindungsgemäß ist jeder Pumpenanwendung, jeder Anlagenart und jeder anwendungsspezifischen Regelungsart, vorzugsweise auch möglichen Sondereinstellungen ein solcher Erklärungstext 18 zugeordnet.

Die Erklärungstexte 18 können in einer Datenbank gespeichert sein, beispielsweise gemeinsam mit den Reglerkonfigurationen 12 in demselben Speicher 11. Sie können aber auch in einem eigenen Speicher hinterlegt sein. Bei der Auswahl einer Pumpenanwendung, einer Anlagenart oder einer der jeweiligen Anlagenart zugeordneten Regelungsart wird dann der jeweilige zugeordnete Erklärungstext 18 geladen und angezeigt.

Um zu ermöglichen, dass für eine hydraulische Anlage 1 auch eine solche Regelungsart ausgewählt werden kann, die nicht in der Zuordnung 17a enthalten ist, beispielsweise im Falle der Radiatorheizung eine Konstantdruckregelung, ist auf der Einstellungsebene der Anlagenarten eine benutzerdefinierte Einstellung vorgesehen, die zumindest einen Teil der Regelungsarten vorzugsweise alle der Vielzahl an Regelungsarten beinhaltet und ausgewählt werden können, wie dies Fig. 7 unter "Benutzerdefiniert" zeigt. Zusätzlich zu den auswählbaren hydraulischen Anlagen A1-A5 wird hierzu im ersten Dialogfenster 31 eine Regelungsartenliste 39 zur Auswahl angezeigt. Im Falle der Auswahl der Regelungsartenliste 39 werden dann die in ihr enthaltenen Regelungsarten dargestellt und die Bedienperson kann eine entsprechende Auswahl aus dieser Regelungsartenliste 39 vornehmen.

Die Reglerkonfigurationen 12 umfassen jeweils einen Regelungsalgorithmus 19 und einen Datensatz mit Reglerkonfigurationsdaten 38. Die Reglerkonfigurationsdaten 38 parametrieren den jeweiligen Regelungsalgorithmus 19 und umfassen Parameter für den Proportionalanteil (P-Anteil), den Integralanteil (I-Anteil) und gegebenenfalls den Differentialanteil (D-Anteil) eines P-Reglers, PI-Reglers, PD-Reglers oder eines PID-Reglers. Zusätzlich definieren sie Grenzwerte für den Sollwert und für die Reglerparameter.

Der Regler selbst wird durch den Regelungsalgorithmus 19 festgelegt, wobei der Regelungsalgorithmus 19 die Struktur des Reglers durch eine mathematische Beschreibung definiert. Diese erfolgt wiederum ebenfalls in Software, d.h. durch Programmmittel bzw. Quellcode. Dieser, einen Regelungsalgorithmus 19 definierende Quellcode kann innerhalb derselben Datenbank bzw. Speicher 11 oder in einer anderen Datenbank bzw. einem anderen Speicher, z.B. Speicher 16 hinterlegt sein. Der Datensatz mit den Reglerkonfigurationsdaten 38 enthält dann zumindest einen Verweis auf den entsprechenden Regelungsalgorithmus 19, den die Reglerkonfigurationsdaten 38 parametrieren. Die Menge an Regelungsalgorithmen ist in Fig. 4 mit der Bezugsziffer 19 dargestellt, die Datensätze mit Reglerkonfigurationsdaten mit Bezugsziffer 38.

Obgleich ein Regelungsalgorithmus 19 einen vergleichsweise einfachen PID-Regler definieren kann, ist im Falle einer Automatikregelung der Regelungsalgorithmus anders und weitaus komplizierter. Zu verweisen ist hier auf die Patentanmeldungen DE 102011012211 A1 oder DE 102014018020 A1, die beispielhaft Automatikregelungen für Pumpenaggregate beschreiben.

Zusätzlich zu den Reglerkonfigurationen 12 sind den Kombinationen aus Anlagenart und Regelungsart jeweils eine oder mehrere aktivierbare Sondereinstellungen einer Vielzahl möglicher Sondereinstellungen S1-S8 zugeordnet. Mögliche Sondereinstellungen sind beispielsweise die Vorgabe des Auslegungspunktes der hydraulischen Anlage (Nennpunkteingabe), die Vorgabe einer Minimalförderhöhe, die Nachtabsenkung, der hydraulischer No-Flow Stop, die Vorgabe eines Maximalvolumenstroms, die Vorgabe eines Minimalvolumenstroms, die Angabe, ob Mischer in Sekundärkreisen vorliegen, und die thermische Desinfektion.

Sondereinstellung "Nennpunkteingabe" sieht vor, dass dem Konfigurationsassistenten 14 die Nennförderhöhe der hydraulischen Anlage 1 mitgeteilt wird. Zusätzlich kann der Nennvolumenstrom mitgeteilt werden. Die Regelkurve wird dann so eingestellt, dass sie durch die Nennförderhöhe und den Nennvolumenstrom verläuft. Wird der Nennvolumenstrom nicht angegeben, wird die Regelkurve so gewählt, dass die vorgegebenen Nennförderhöhe auf der Maximalkurve liegt. Dieses Verfahren ist in der deutschen Patentanmeldung DE 102016004458.6 beschrieben.

Sondereinstellung "Vorgabe einer Minimalförderhöhe" sieht vor, dass die Förderhöhe bei der Regelung stets oberhalb einer vorgegebenen Minimalförderhöhe bleibt. Dies berücksichtigt Rückschlagklappen oder Rückflussverhinderer in der hydraulischen Anlage, die erst bei Überschreiten der Minimalförderhöhe öffnen und dadurch einen Volumenstrom ermöglichen.

Sondereinstellung "Nachtabsenkung" sieht vor, dass das Pumpenaggregat auf eine minimaldrehzahl gefahren wird oder ausgeschaltet wird, wenn es eine für die Nacht typische Absenkung der Vorlauftemperatur der Heizung erkennt.

Sondereinstellung "No-Flow Stop" sieht vor, dass das Pumpenaggregat unterhalb eines bestimmten Volumenstroms, z.B. wenn sämtliche Thermostatventile der Verbraucher 4 schließen, zeitweise ausgeschaltet wird. Das Verfahren ist in der deutschen Patentanmeldung DE 102011008165 A1 beschrieben.

Sondereinstellung "Vorgabe eines Maximalvolumenstroms" sieht vor, dass bei der Regelung des Pumpenaggregats ein maximaler Volumenstrom nicht überschritten wird und im Falle des Überschreitens auf dem Maximalvolumenstrom gehalten wird. Dies bewirkt, dass der Betriebspunkt nicht in Bereiche gelangt, die energetisch ungünstig sind.

Sondereinstellung "Vorgabe eines Minimalvolumenstroms" sieht vor, dass bei der Regelung des Pumpenaggregats sein minimaler Volumenstrom nicht unterschritten wird, der Volumenstrom also stets oberhalb dieses Mindestvolumenstroms liegt. Dies ist bei bestimmten hydraulischen Anlagen wie beispielsweise bei der Trinkwasserzirkulation oder bei Trinkwasserspeicher Ladesystemen erforderlich.

Sondereinstellung "Mischer in Sekundärkreisen" bewirkt eine Anpassung des Regelungsalgorithmus bei einer Summenvolumenstromregelung für den Fall, dass in den sekundärseitigen Verbraucherkreisen Mischer vorhanden sind.

Sondereinstellung "thermische Desinfektion" sieht vor, dass die Pumpe ihre Leistung im Falle einer thermischen Desinfektion der Anlage erhöht.

Die Sondereinstellungen S1-S8 umfassen einerseits Sonderfunktionen, die zusätzlich zum Regelungsalgorithmus wirken, diesen gegebenenfalls ergänzend überlagern, beispielsweise die Führungsgröße, d.h. einen Sollwert der Regelung beeinflussen, wenn bestimmte Bedingungen erfüllt sind, beispielsweise Grenzwerte erreicht werden wie bei Sonderfunktionen Minimalförderhöhe, Maximalstrom und Minimalstrom oder ein bestimmter Anlagenzustand erkannt wird wie bei der Nachabsenkung, dem No-Flow Stop und der thermischen Desinfektion. Andere Sondereinstellungen ändern den Regelungsalgorithmus, wie bei der Nennpunkteingabe und den Mischern in Sekundärkreisen.

Zu jeder Kombination aus Anlagenart und Regelungsart besitzt der Konfigurationsassistent somit eine Gruppe der o.g. Sondereinstellungen, die für die jeweilige Regelungsart in der spezifischen Anwendung, in der sich das Pumpenaggregat 2 befindet, sinnvoll ist. Die Zuordnung der Sondereinstellungen zu den Kombinationen kann in den Reglerkonfigurationen 12 enthalten sein, da auch diese mit jeweils einer Kombination direkt verknüpft ist.

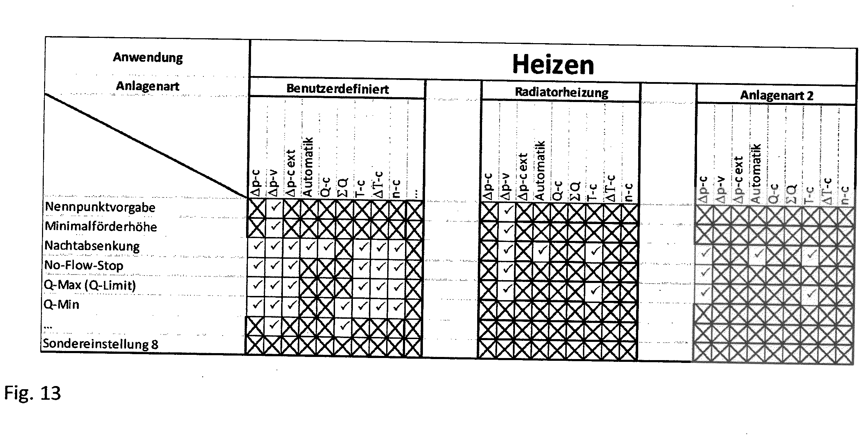

Durch die Auswahl einer Anlagenart und einer Regelungsart ist somit nicht nur die Reglerkonfiguration festgelegt, sondern auch die Gruppe an Sondereinstellungen. Im Falle der in Fig. 10 dargestellten Auswahl einer Radiatorheizung und einer Differenzdruck variable-Regelung ist die Gruppe der dieser Kombination zugeordneten Sondereinstellungen durch die Nennpunktvorgabe, die Vorgabe einer Minimalförderhöhe, die Nachtabsenkung, die Funktion No-Flow Stop und die Vorgabe eines Maximalvolumenstroms gebildet, siehe Fig. 13. Im Anschluss an die Auswahl der Regelung wird nicht nur die Reglerkonfiguration 12 eingestellt, sondern auch die Gruppe an Sondereinstellungen berücksichtigt. Dies kann auf unterschiedliche Art erfolgen.

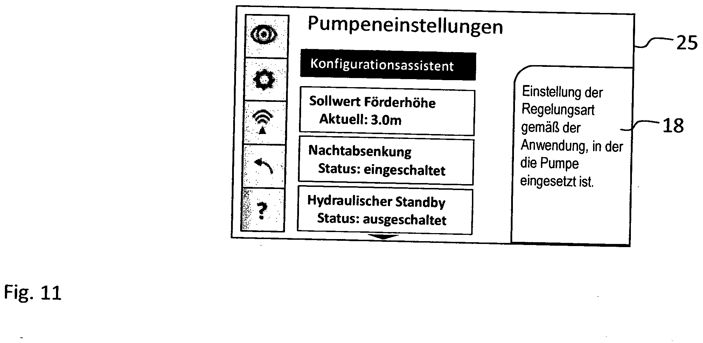

Gemäß einer Variante werden der Bedienperson aktivierbare Sonderstellungen auf der Anzeige 25 dargestellt, sobald die verknüpfte Reglerkonfiguration 12 feststeht, insbesondere eingestellt ist. Dies ist in Fig. 11 gezeigt. Hier sind die Sondereinstellungen Nachtabsenkung und hydraulischer No-Flow Stop einschließlich ihres Aktivierungsstatus dargestellt, d.h. nicht alle der zugeordneten Sondereinstellungen. Die nicht dargestellten Sondereinstellungen können jedoch durch Scrollen nach unten erreicht werden. Die Bedienperson kann eine der Sondereinstellungen auswählen und aktivieren bzw. deaktivieren.

Durch die Aktivierung einer der Sondereinstellungen wird eine zur ausgewählten Regelungsart zusätzlich wirkende Sonderfunktion aktiviert oder die Reglerkonfiguration geändert. Wie das Beispiel der Nachtabsenkung in Fig. 11 zeigt, kann eine zugeordnete Sondereinstellung bei der Einstellung der verknüpften Reglerkonfiguration 12 auch sogleich vom Konfigurationsassistenten 14 aktiviert werden.

Gegebenenfalls ist es sinnvoll, eine unmittelbar aktivierte Sondereinstellung für eine Deaktivierung zu sperren, insbesondere gar nicht erst anzuzeigen. Dies ist beispielsweise bei der Sondereinstellung "Mischer in Sekundärkreisen" und bei Sondereinstellung "Vorgabe eines Minimalvolumenstroms" der Fall, bei letzterer zumindest bei bestimmten Anlagenarten.

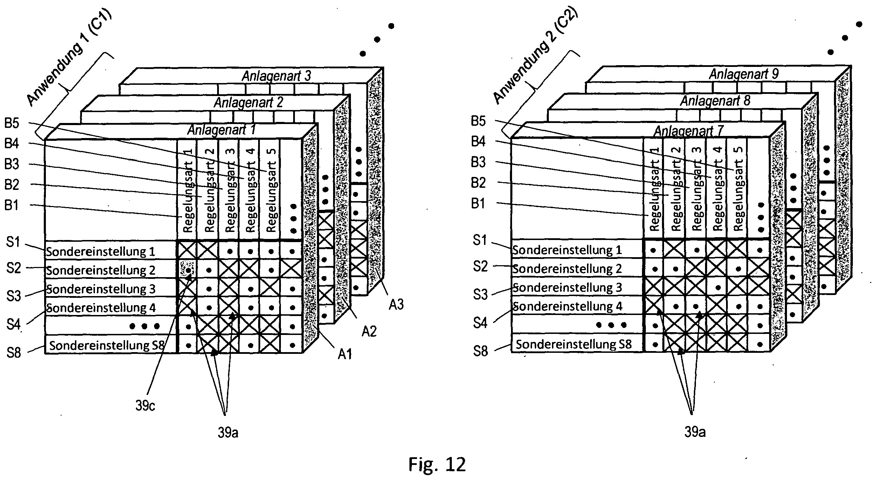

Eine beispielhafte Darstellung von Zuordnungen der Sondereinstellungen S1-S8 zu sämtlichen Kombinationen aus Anlagenart und Regelungsart ist in den Figuren 12 und 13 in Gestalt von Tabellen gezeigt. Diese Zuordnungen sind ebenfalls Teil des erfindungsgemäßen Konfigurationsassistenten 14 und bereichern ihn zusätzlich mit Intelligenz.

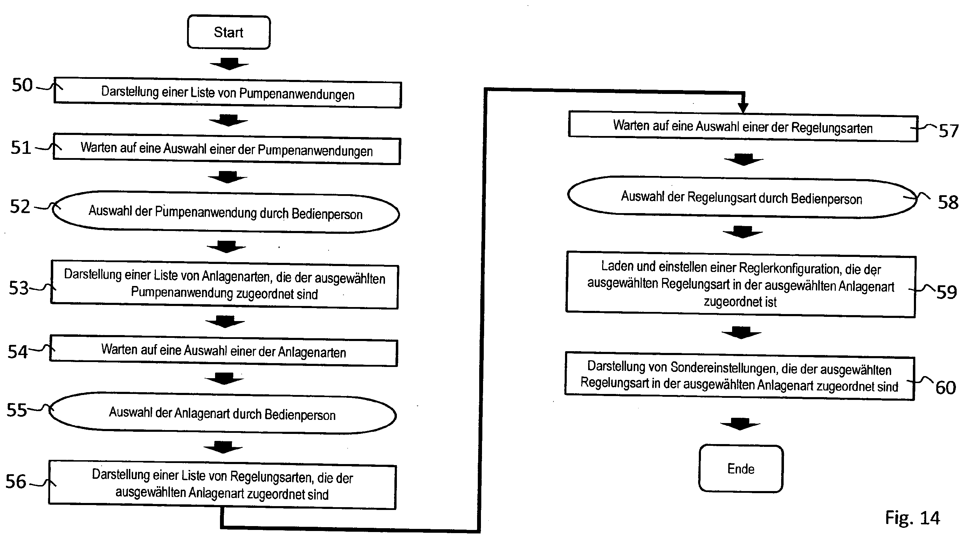

Der Ablauf des erfindungsgemäßen Konfigurationsverfahrens ist in Fig. 14 dargestellt. Er beginnt mit der Aktivierung des Konfigurationsassistenten 14, der sodann in Schritt 50 eine Liste 33a von Pumpenanwendungen darstellt und anschließend auf die Auswahl einer dieser Pumpenanwendungen wartet, Schritt 51. Es folgt daraufhin eine Auswahl einer Pumpenanwendung durch die Bedienperson, Schritt 52.

Sodann erfolgt die Darstellung einer Liste 31a von Anlagenarten, die der ausgewählten Pumpenanwendung zugeordnet sind, Schritt 53. Anschließend wird auf die Auswahl einer dieser Anlagenarten wartet, Schritt 54. Es folgt eine Auswahl durch die Bedienperson, Schritt 55.

Es schließt sich die Darstellung einer Liste 32a von Regelungsarten an, die der ausgewählten Anlagenart zugeordnet sind, Schritt 56. Anschließend wird auf die Auswahl einer dieser Regelungsarten wartet, Schritt 57. Es folgt eine Auswahl durch die Bedienperson, Schritt 58. Durch die ausgewählte Regelungsart und die ausgewählte Anlagenart ist die Reglerkonfiguration gemäß der Zuordnung 17a festgelegt. Es folgt das Laden und Einstellen der Reglerkonfiguration, die der ausgewählten Regelungsart in der ausgewählten Anlagenart zugeordnet ist, Schritt 59.

Zusätzlich werden Sondereinstellungen auf der Anzeige 25 dargestellt, die der ausgewählten Regelungsart in der ausgewählten Anlagenart zugeordnet sind, Schritt 60, die die Bedienperson anwählen und zusätzlich aktivieren kann, wie dies zuvor beschrieben wurde. Das Verfahren ist somit beendet und die Konfiguration abgeschlossen.

Mit der Bildung bestimmter Kombinationen von Anlagenart und Regelungsart in der Zuordnung 17a einschließlich der Vordefinition einer Vielzahl an Reglerkonfigurationen für jede dieser Kombinationen, die jeweils den anzuwendenden Regelungsalgorithmus als auch dessen Parametrierung umfasst, einschließlich der Zuordnung bestimmter Sondereinstellungen zu jeder Kombination, wird ein intelligenter Konfigurationsassistent bereitgestellt, der eine optimale anwendungsspezifische Anpassung eines Kreiselpumpenaggregats ermöglicht. Das erfindungsgemäße Verfahren ermöglicht auf einfachen und schnellem Wege eine anwendungsspezifische Konfiguration eines Kreiselpumpenaggregats 2 in einer hydraulischen Anlage 1, ohne dass besondere Kenntnisse über die hydraulischen Eigenschaften der Anlage oder das Pumpenkennfeld erforderlich sind, so dass auch unerfahrene Bedienpersonen zu einer richtigen Pumpenkonfiguration gelangen.

### Bezugszeichenliste

1 Hydraulische Anlage
2 Pumpenaggregat
2' anderes Pumpenaggregat
3 Heizquelle
4 Heizkörper
5 Vorlaufleitung
6 Rücklaufleitung
7a Differenzdrucksensor
10 Konfigurationseinrichtung
10a Piktogramm
11 Datenbank
12 Reglerkonfiguration
12a gesperrte Kombination
12b voreingestellte Kombination
13 Steuereinheit, Mikroprozessor
14 Konfigurationsassistent
14a Programmmittel
15 Pumpenregelung, Mikroprozessor
16 Speicher
17a Zuordnung mit Kombinationen von Anlagenarten und Regelungsarten
17b Zuordnung mit Kombinationen von Pumpenanwendungen und Anlagenarten
18 Erklärungstext
19 Regelungsalgorithmen
20 Sonderfunktionen
21 Pumpeneinheit
22 Elektromotor
23 Pumpenelektronik
24 Anzeige- und Bedieneinheit
25 Anzeige
26 Bedienknopf
27 Bedientaste
28 Kommunikationsschnittstelle
29 Anschlussklemmen
30 Handgerät
31 Erstes Dialogfenster
35a Liste
32 Zweites Dialogfenster
36a Liste
33 Drittes Dialogfenster
37a Liste
38 Datensätze mit Reglerkonfigurationsdaten
39 Regelungsartenliste
50-60 Verfahrensschritte
A1 bis A5: Anlagenarten
B1 bis B5: Regelungsarten
C1 bis C5: Pumpenanwendungen

## Patentansprüche

1. Konfigurationsverfahren für ein drehzahlregelbares Kreiselpumpenaggregat (2) in einer hydraulischen Anlage (1), das bestimmungsgemäß für eine Vielzahl unterschiedlicher Anlagenarten (A1-A5) einsetzbar und in einer Vielzahl verschiedener Regelungsarten (B1-B5) mit einer entsprechenden Reglerkonfiguration betreibbar ist, **dadurch gekennzeichnet, dass** einer Konfigurationseinrichtung (10) von einer Bedienperson zumindest eine der Anlagenarten (A1-A5) und/ oder eine der Regelungsarten (B1-B5) vorgegeben wird, wobei die Konfigurationseinrichtung (10) eine gespeicherte vordefinierte Zuordnung (17a), bei der jeder der Anlagenarten (A1-A5) zumindest eine der Regelungsarten (B1-B5) zugeordnet ist, sowie eine Vielzahl anwendungsspezifischer Reglerkonfigurationen (12) umfasst, und die in der Zuordnung (17a) enthaltenen Kombinationen aus einer Anlagenart und einer Regelungsart jeweils mit einer der Reglerkonfigurationen (12) verknüpft sind, und dass die Konfigurationseinrichtung (10) gemäß dieser Zuordnung (17a) in Abhängigkeit der vorgegebenen Anlagenart und/ oder vorgegebenen Regelungsart die entsprechend verknüpfte Reglerkonfiguration (17) auswählt und am Kreiselpumpenaggregat (2) einstellt.

2. Konfigurationsverfahren nach Anspruch 1, **dadurch gekennzeichnet, dass** auf einer Anzeige (25) eine Darstellung (31a) der hydraulischen Anlagenarten (A1-A5) angezeigt und auf eine Auswahl einer der dargestellten Anlagenarten (A1-A5) durch die Bedienperson gewartet wird, und dass gemäß der vordefinierten Zuordnung (17a), in Abhängigkeit der ausgewählten Anlagenart
- auf der Anzeige (25) eine Darstellung (32a) derjenigen Regelungsart oder Regelungsarten angezeigt wird, die der ausgewählten Anlagenart zugeordnet ist/ sind, und auf die Auswahl der oder einer der dargestellten Regelungsarten durch die Bedienperson gewartet wird, wobei infolge dieser Auswahl die mit der Kombination aus ausgewählter Regelungsart und ausgewählter Anlagenart verknüpfte Reglerkonfiguration (12) am Kreiselpumpenaggregat (2) eingestellt wird, oder
- im Falle der Auswahl einer der Anlagenarten (A1-A5), der nur eine der Regelungsarten (B1-B5) zugeordnet ist, automatisch direkt die mit der Kombination aus dieser einen Regelungsart und ausgewählten Anlagenart verknüpfte Reglerkonfiguration (12) am Kreiselpumpenaggregat (2) eingestellt wird.

3. Konfigurationsverfahren nach Anspruch 1, **dadurch gekennzeichnet, dass** auf einer Anzeige (25) eine Darstellung (31a) der Regelungsarten (B1-B5) angezeigt und auf eine Auswahl einer der dargestellten Regelungsarten (A1-A5) durch die Bedienperson gewartet wird, und dass gemäß der vordefinierten Zuordnung (17a) in Abhängigkeit der ausgewählten Regelungsart
- auf der Anzeige (25) eine Darstellung derjenigen Anlagenart oder Anlagenarten angezeigt wird, die der ausgewählten Regelungsart zugeordnet ist/ sind, und auf die Auswahl der oder einer der dargestellten Anlagenarten durch die Bedienperson gewartet wird, wobei infolge dieser Auswahl die mit der Kombination aus ausgewählter Regelungsart und ausgewählter Anlagenart verknüpfte Reglerkonfiguration (12) am Kreiselpumpenaggregat (2) eingestellt wird, oder
- im Falle der Auswahl einer der Regelungsarten (B1-B5), der nur eine der Anlagenarten (A1-A5) zugeordnet ist, automatisch direkt die mit der Kombination aus dieser einen Anlagenart und ausgewählten Regelungsart verknüpfte Reglerkonfiguration (12) am Kreiselpumpenaggregat (2) eingestellt wird.

4. Konfigurationsverfahren nach einem der vorherigen Ansprüche, **dadurch gekennzeichnet, dass** jede Reglerkonfiguration (12) einen Regelungsalgorithmus (20) und einen Datensatz (38) mit Reglerkonfigurationsdaten umfasst.

5. Konfigurationsverfahren nach Anspruch 2 oder 4, rückbezogen auf Anspruch 2, **dadurch gekennzeichnet, dass** zusätzlich zu den auswählbaren hydraulischen Anlagen (A1-A5) eine Regelungsartenliste (39) zur Auswahl angezeigt wird, die zumindest einen Teil der Regelungsarten vorzugsweise alle der Vielzahl an Regelungsarten beinhaltet, wobei im Falle der Auswahl der Regelungsartenliste (39) die enthaltenen Regelungsarten dargestellt werden.

6. Konfigurationsverfahren nach einem der Ansprüche 2 bis 5, **dadurch gekennzeichnet, dass** vor der Darstellung (31a) der Anlagenarten (A1-A5) auf der Anzeige (25) eine Darstellung (33a) von Pumpenanwendungen (C1-C3) angezeigt und auf eine Auswahl einer dieser Pumpenanwendungen (C1-C3) durch die Bedienperson gewartet wird, und dass anschließend gemäß einer vordefinierten Zuordnung, bei der jeder der Pumpenanwendungen (C1-C3) zumindest eine der Anlagenarten (A1-A5) zugeordnet ist, in Abhängigkeit der ausgewählten Pumpenanwendung nur diejenige Anlagenart oder Anlagenarten zur Auswahl dargestellt wird/ werden, die der ausgewählten Pumpenanwendung zugeordnet ist/sind.

7. Konfigurationsverfahren nach einem der Ansprüche 2 bis 6, **dadurch gekennzeichnet, dass** die Darstellung (31a, 32a, 33a) der Anlagenarten (A1-A5), und/ oder der Regelungsarten und/ oder der Pumpenanwendungen (C1-C3) auf der Anzeige (25) als Liste, insbesondere jeweils in einem eigenen Dialogfenster (31, 32, 33) erfolgt.

8. Konfigurationsverfahren nach einem der vorherigen Ansprüche, insbesondere nach Anspruch 6, **dadurch gekennzeichnet, dass** das Kreiselpumpenaggregat (2) über eine Vielzahl von Sondereinstellungen (S1-S8) zu den Regelungsarten (B1-B5) verfügt, wobei in Abhängigkeit der angegebenen Anlagenart und/ oder einer ausgewählten Pumpenanwendung eine Einschränkung der verfügbaren Sondereinstellungen und/ oder eine Aktivierung zumindest einer der Sondereinstellungen (S1-S8) erfolgt.

9. Konfigurationsverfahren nach einem der Ansprüche 2 bis 8, **dadurch gekennzeichnet, dass** den Kombinationen aus Anlagenart und Regelungsart jeweils eine oder mehrere aktivierbare Sondereinstellungen einer Vielzahl möglicher Sondereinstellungen (S1-S8) zugeordnet ist/ sind.

10. Konfigurationsverfahren nach Anspruch 9, **dadurch gekennzeichnet, dass** von den zugeordneten Sondereinstellungen eine, mehrere oder alle auf der Anzeige (25) dargestellt werden, sobald die verknüpfte Reglerkonfiguration (12) feststeht.

11. Konfigurationsverfahren nach Anspruch 9 oder 10, **dadurch gekennzeichnet, dass** durch die Aktivierung einer der Sondereinstellungen (S1-S8) eine zur ausgewählten Regelungsart zusätzlich wirkende Sonderfunktion aktiviert oder die Reglerkonfiguration (12) geändert wird.

12. Konfigurationsverfahren nach einem der Ansprüche 9 bis 11, **dadurch gekennzeichnet, dass** eine oder mehr der zugeordneten Sondereinstellungen bei der Einstellung der verknüpften Reglerkonfiguration (12) unmittelbar aktiviert wird.

13. Konfigurationsverfahren nach Anspruch 12, **dadurch gekennzeichnet, dass** eine unmittelbar aktivierte Sondereinstellung für eine Deaktivierung gesperrt ist, insbesondere nicht angezeigt wird.

14. Konfigurationsverfahren nach einem der Ansprüche 2 bis 13, **dadurch gekennzeichnet, dass** die Konfigurationseinrichtung (10) selbsttätig erkennt, wenn ein Sensor angeschlossen ist, insbesondere welcher Typ Sensor und/ oder wie viele Sensoren angeschlossen ist/ sind, und dass aufgrund eines erkannten Sensors nur oder zusätzlich diejenige Regelungsart oder diejenigen Regelungsarten auf der Anzeige (25) zur Auswahl dargestellt wird oder werden, die einen angeschlossenen Sensor, insbesondere den angeschlossenen Sensortyp benötigt/ benötigen, oder die eine der Anzahl angeschlossener Sensoren entsprechende Sensoranzahl benötigt/ benötigen.

15. Konfigurationsverfahren nach einem der Ansprüche 2 bis 14, **dadurch gekennzeichnet, dass** die Konfigurationseinrichtung (10) selbsttätig erkennt, ob ein Sensor angeschlossen ist, insbesondere welcher Typ Sensor und/ oder wie viele Sensoren angeschlossen ist/ sind, und dass bei der Auswahl einer der Regelungsarten, die zumindest einen angeschlossenen Sensor oder einen bestimmten Sensortyp oder eine bestimmte Sensoranzahl benötigt, ein Fehler und/ oder eine Handlungsaufforderung ausgegeben wird, wenn kein Sensor oder nicht der benötigte Sensortyp oder ein Sensor zu wenig angeschlossen ist.

16. Konfigurationsverfahren nach einem der Ansprüche 2 bis 15, **dadurch gekennzeichnet, dass** die Konfigurationseinrichtung (10) selbsttätig erkennt, wenn das Kreiselpumpenaggregat (2) mit zumindest einem anderen Kreiselpumpenaggregat (2') verbunden, insbesondere vernetzt ist, und dass aufgrund der erkannten Verbindung zu oder Vernetzung mit zumindest einem anderen Kreiselpumpenaggregat (2') nur oder zusätzlich diejenige Regelungsart oder diejenigen Regelungsarten auf der Anzeige (25) zur Auswahl dargestellt wird oder werden, die eine Verbindung oder Vernetzung mit zumindest einem anderen Kreiselpumpenaggregat (2') benötigt/ benötigen.

17. Konfigurationsverfahren nach einem der Ansprüche 2 bis 16, **dadurch gekennzeichnet, dass** die Konfigurationseinrichtung (10) selbsttätig erkennt, wenn das Kreiselpumpenaggregat (2) mit zumindest einem anderen Kreiselpumpenaggregat (2) verbunden, insbesondere vernetzt ist, und dass bei der Auswahl einer der Regelungsarten, die eine Verbindung oder Vernetzung mit zumindest einem anderen Kreiselpumpenaggregat (2') benötigt, ein Fehler und/ oder eine Handlungsaufforderung ausgegeben wird, wenn kein anderes Kreiselpumpenaggregat (2') mit dem Kreiselpumpenaggregat (2) verbunden ist.

18. Konfigurationsverfahren nach Anspruch 2 oder einem der Ansprüche 4 bis 17, rückbezogen auf Anspruch 2, **dadurch gekennzeichnet, dass** bei zwei oder mehr einer Anlagenart zugeordneten Regelungsarten eine dieser Regelungsarten als Voreinstellung verwendet wird, insbesondere als bevorzugte Regelungsart vorgeschlagen und/ oder direkt eingestellt wird.

19. Konfigurationsverfahren nach einem der Ansprüche 2 bis 18, **dadurch gekennzeichnet, dass** ein individueller Erläuterungstext (18) auf der Anzeige (25) zu einer Auswahlmöglichkeit dargestellt wird.

20. Softwarebasierter grafischer Konfigurationsassistent (14) zur Einstellung einer Regelungsart bei einem drehzahlregelbaren Kreiselpumpenaggregat (2), das bestimmungsgemäß für eine Vielzahl unterschiedlicher Anlagenarten (A1-A5) einsetzbar und in einer Vielzahl verschiedener Regelungsarten (B1-B5) mit einer entsprechender Reglerkonfiguration betreibbar ist, mit Programmmitteln (14a) zur Abarbeitung bei der Ausführung auf einem Prozessor, **dadurch gekennzeichnet, dass** er eine Vielzahl vordefinierter anwendungsspezifischer Reglerkonfigurationen (12) umfasst und in den Programmmitteln (14a) jeder der Anlagenarten (A1-A5) zumindest eine der Regelungsarten (B1-B5) zugeordnet ist und jede Kombination aus Anlagenart (A1-A5) und zugeordneter Regelungsart (B1-B5) mit einer der vordefinierten, anwendungsspezifischen Reglerkonfigurationen (12) verknüpft ist, wobei die Reglerkonfigurationen (12) in zumindest einer von den Programmmitteln abfragbaren Datenbank (11) hinterlegt sind, und dass die Programmmittel (14a) dazu eingerichtet sind, das Verfahren nach einem der Ansprüche 1 bis 19 auszuführen.

21. Konfigurationsassistent (14) nach Anspruch 20, **dadurch gekennzeichnet, dass** in den Programmmitteln (14a) jede der Anlagenarten (A1-A5) einer Pumpenanwendung von mehreren Pumpenanwendungen (C1-C3) zugeordnet ist, und die Programmmittel (14a) dazu eingerichtet sind, auf der Anzeige (25) eine Darstellung (15a) der Pumpenanwendungen (C1-C3) anzuzeigen und auf eine Auswahl einer der dargestellten Pumpenanwendungen (C1-C3) zu warten, und anschließend nur diejenigen Anlagenarten (A1-A5) darzustellen, die der ausgewählten Pumpenanwendung zugeordnet sind.

22. Konfigurationsassistent (14) nach einem der Ansprüche 20 oder 21, **dadurch gekennzeichnet, dass** er eine Vielzahl aktivierbarer Sondereinstellungen (S1-S8) umfasst, und innerhalb der Programmmittel (14a) oder der Reglerkonfigurationen (12) den Kombinationen aus Anlagenart und Regelungsart jeweils eine oder mehrere der Sondereinstellungen zugeordnet ist/ sind.

23. Konfigurationsassistent (14) nach einem der Ansprüche 20 bis 22, **dadurch gekennzeichnet, dass** er eine Vielzahl individueller Erläuterungstexte (18) zur Darstellung auf der Anzeige (25) umfasst, wenn eine entsprechende Anwahl einer Auswahlmöglichkeit durch die Bedienperson erfolgt.

24. Kreiselpumpenaggregat (2), das bestimmungsgemäß für eine Vielzahl unterschiedlicher Anlagenarten (A1-A5) einsetzbar und in einer Vielzahl verschiedener Regelungsarten (B1-B5) mit einer entsprechenden Reglerkonfiguration betreibbar ist, mit einer Pumpenelektronik (23), die mit einer Anzeige (25) zur Darstellung zumindest einer auswählbaren Anlagenart, zumindest einer auswählbaren Regelungsart, zumindest einer auswählbaren Pumpenanwendung und/ oder zumindest einer aus- oder abwählbaren Sondereinstellung, und mit zumindest einem Eingabemittel (26, 27) zur Anwahl und Vornahme einer Auswahl einer Anlagenart, einer Regelungsart, einer Pumpenanwendung und/ oder einer Sondereinstellung in Wirkverbindung steht, **dadurch gekennzeichnet, dass** die Pumpenelektronik (23) eine Konfigurationseinrichtung (10) mit einem Konfigurationsassistenten (14) nach einem der Ansprüche 20 bis 23 zur anwendungsspezifischen Konfiguration des Kreiselpumpenaggregats (2) aufweist.

25. Kreiselpumpenaggregat (2) nach Anspruch 24, **dadurch gekennzeichnet, dass** die Anzeige (25) und das Eingabemittel (26, 27) baulich eine Einheit mit der Pumpenelektronik (23) bilden oder eine von der Pumpenelektronik (23) baulich unabhängige Baueinheit bilden.

26. Anordnung bestehend aus einem Kreiselpumpenaggregat (2) mit einer Pumpenelektronik (23) und einem mobilen Handgerät (30) zur Konfiguration des Kreiselpumpenaggregats (2), wobei das Handgerät (30) mit dem Kreiselpumpenaggregat (2) über eine Kommunikationsverbindung datentechnisch verbindbar ist, und das Handgerät (30) eine Anzeige (25) zur Darstellung zumindest einer auswählbaren Anlagenart, zumindest einer auswählbaren Regelungsart, zumindest einer auswählbaren Pumpenanwendung und/ oder zumindest einer aus- oder abwählbaren Sondereinstellung, und zumindest ein Eingabemittel (26, 27) zur Anwahl und Vornahme einer Auswahl einer Anlagenart, einer Regelungsart, einer Pumpenanwendung und/ oder einer Sondereinstellung aufweist, **dadurch gekennzeichnet, dass** das Handgerät (30) eine Konfigurationseinrichtung (10) mit einem Konfigurationsassistent (14) nach einem der Ansprüche 20 bis 23 zur Auswahl einer vordefinierten, anwendungsspezifischen Reglerkonfiguration (12), und dazu eingerichtet ist, die Reglerkonfiguration (12) über die Kommunikationsverbindung zu dem Kreiselpumpenaggregat (2) zu übertragen, und die Pumpenelektronik (23) dazu eingerichtet ist, die übertragene Reglerkonfiguration (12) einzustellen.

## Claims

1. Configuration procedure for a rotary pump assembly with speed control (2) in a hydraulic plant (1) intended for operation in numerous different plant types (A1-A5) and with numerous different control modes (B1-B5) with a corresponding controller configuration, **characterised by** an operator specifying at least one of the plant types (A1-A5) and/or one of the control modes (B1-B5) for a configuration device (10), in which the configuration device (10) encompasses a stored predefined assignment (17a), whereby each of the plant types (A1-A5) is assigned to at least one control mode (B1-B5), as well as numerous application-specific controller configurations (12), and the combinations of a plant type and control mode included in the assignment (17a) are respectively linked to a controller configuration (12), and the configuration device (10) selects the corresponding linked controller configuration (17) according to this assignment (17a) depending on the specified plant type and/or the specified control mode and sets it on the rotary pump assembly (2).

2. Configuration procedure according to claim 1, **characterised by** a display (25) that shows a presentation (31a) of the hydraulic plant types (A1-A5) and waits for a selection of the presented plant types (A1-A5) by the operator and, according to the predefined assignment (17a), depending on the selected plant type
- the display (25) shows a presentation (32a) of the control mode or control modes assigned to the selected plant type and waits for the selection of the, or one of the, presented control modes by the operator, in which, as a result of this selection, the controller configuration (12) linked with the combination of the selected control mode and the selected plant type is set on the rotary pump assembly (2), or
- in case of selecting one of the plant types (A1-A5), to which only one of the control modes (B1-B5) is assigned, the controller configuration (12) linked to the combination of this one control mode and selected plant type is automatically set directly on the rotary pump assembly (2).

3. Configuration procedure according to claim 1, **characterised by** a display (25) that shows a presentation (31a) of the control modes (B1-B5) and waits for a selection of one of the presented control modes (A1-A5) by the operator and, according to the predefined assignment (17a), depending on the selected control mode
- the display (25) shows a presentation of the plant type or plant types assigned to the selected control mode and waits for the selection of the, or one of the, presented plant types by the operator, in which, as a result of this selection, the controller configuration (12) linked with the combination of the selected control mode and the selected plant type is set on the rotary pump assembly (2), or
- in case of selecting one of the control modes (B1-B5), to which only one of the plant types (A1-A5) is assigned, the controller configuration (12) linked to the combination of this one plant type and selected control mode is automatically set directly on the rotary pump assembly (2).

4. Configuration procedure according to one of the preceding claims, **characterised by** each controller configuration (12) encompassing a control algorithm (20) and a dataset (38) with controller configuration data.

5. Configuration procedure according to claim 2 or 4, referring back to claim 2, **characterised by** a control mode list (39) for selection being displayed in addition to the hydraulic plants available for selection (A1-A5), containing at least a subset and preferably all of the numerous control modes, in which the control modes contained in the list are displayed when the control mode list (39) is selected.

6. Configuration procedure according to one of the claims 2 through 5, **characterised by** the presentation (33a) of pump applications (C1-C3) before the presentation (31a) of the plant types (A1-A5) on the display (25) and by waiting for a selection of one of these pump applications (C1-C3) by the operator and, according to one of the predefined assignments, whereby each of the pump applications (C1-C3) is assigned to at least one of the plant types (A1-A5), only the plant type or plant types assigned to the selected pump application is/are subsequently presented for selection according to the selected pump application.

7. Configuration procedure according to one of the claims 2 through 6, **characterised by** the presentation (31a, 32a, 33a) of the plant types (A1-A5) and/or the control modes and/or the pump applications (C1-C3) on the display (25) as a list, notably each in its own dialogue window (31, 32, 33).

8. Configuration procedure according to one of the preceding claims, notably claim 6, **characterised by** the rotary pump assembly (2) having numerous custom settings (S1-S8) for the control modes (B1-B5), in which the available custom settings (S1-S8) are restricted and/or at least one of the custom settings is activated depending on the specified plant type and/or a selected pump application.

9. Configuration procedure according to one of the claims 2 through 8, **characterised by** one or more custom settings that can be activated, out of numerous possible custom settings (S1-S8), being assigned respectively to the combinations of a plant type and control mode.

10. Configuration procedure according to claim 9, **characterised by** one, several or all of the assigned custom settings being presented on the display (25) as soon as the linked controller configuration (12) is established.

11. Configuration procedure according to claim 9 or 10, **characterised by** a special function that acts in addition to the selected control mode being activated or the controller configuration (12) being changed by the activation of one of the custom settings (S1-S8).

12. Configuration procedure according to one of the claims 9 through 11, **characterised by** one or more of the assigned custom settings being activated directly when the linked controller configuration (12) is set.

13. Configuration procedure according to claim 12, **characterised by** a directly activated custom setting being blocked for deactivation, notably not being displayed.

14. Configuration procedure according to one of the claims 2 through 13, **characterised by** the configuration device (10) automatically recognising when a sensor is connected, notably what sensor type and/or how many sensors are connected and, based on a recognised sensor, the control mode or control modes requiring a connected sensor, notably the connected sensor type, or requiring a number of sensors corresponding to the number of connected sensors, being presented on the display (25) for selection, solely or additionally.

15. Configuration procedure according to one of the claims 2 through 14, **characterised by** the configuration device (10) automatically recognising whether a sensor is connected, notably what sensor type and/or how many sensors are connected and, in the selection of one of the control modes that requires at least one connected sensor or a certain sensor type or a certain number of sensors, an error and/or an action prompt being output if no sensor is connected or the required sensor type is not connected or one fewer sensor than required is connected.

16. Configuration procedure according to one of the claims 2 through 15, **characterised by** the configuration device (10) automatically recognising when the rotary pump assembly (2) is connected to at least one other rotary pump assembly (2'), notably networked, and, based on the recognised connection to or networking with at least one other rotary pump assembly (2'), the control mode or control modes requiring a connection or networking with at least one other rotary pump assembly(2') being presented for selection on the display (25), solely or additionally.

17. Configuration procedure according to one of the claims 2 through 16, **characterised by** the configuration device (10) automatically recognising when the rotary pump assembly (2) is connected to at least one other rotary pump assembly (2'), notably networked, and, in the selection of a control mode that requires a connection to or networking with at least one other rotary pump assembly (2'), an error and/or an action prompt being output if no other rotary pump assembly (2') is connected to the rotary pump assembly (2).

18. Configuration procedure according to claim 2 or one of the claims 4 through 17, referring back to claim 2, **characterised by** one of the control modes in case of two or more control modes assigned to a plant type being used as the pre-setting, notably being suggested as the preferred control mode and/or being set directly.

19. Configuration procedure according to one of the claims 2 through 18, **characterised by** an individual explanatory text (18) being presented on the display (25) for a selection option.

20. Software-based graphical configuration assistant (14) for setting a control mode for a rotary pump assembly (2) with speed control intended for operation with numerous different plant types (A1-A5) and numerous different control modes (B1-B5) with a corresponding controller configuration, with programme resources (14a) for processing during execution on a processor, **characterised by** encompassing numerous predefined application-specific controller configurations (12) and, in the programme resources (14a), at least one of the control modes (B1-B5) being assigned to each of the plant types (A1-A5) and each combination of plant type (A1-A5) and assigned control mode (B1-B5) being linked to one of the predefined, application-specific controller configurations (12), in which the controller configurations (12) are stored in at least one database (11) that can be queried by the programme resources and the programme resources (14a) are set up to execute the procedure according to one of the claims 1 through 19.

21. Configuration assistant (14) according to claim 20, **characterised by** each plant type (A1-A5) being assigned to one pump application out of multiple pump applications (C1-C3) in the programme resources (14a) and the programme resources (14a) being set up for the presentation (15a) of the pump applications (C1-C3) on the display (25), and being set up to wait for a selection of one of the presented pump applications (C1-C3), and to subsequently present only those plant types (A1-A5) that are assigned to the selected pump application.

22. Configuration assistant (14) according to one of the claims 20 or 21, **characterised by** encompassing numerous custom settings (S1-S8) that can be activated and respectively one or more of the custom settings being assigned to the combinations of plant type and control mode within the programme resources (14a) or the controller configurations (12).

23. Configuration assistant (14) according to one of the claims 20 through 22, **characterised by** encompassing numerous individual explanatory texts (18) for presentation on the display (25) when a corresponding selection of a selection option is made by the operator.

24. Rotary pump assembly (2) intended for operation with numerous different plant types (A1-A5) and numerous different control modes (B1-B5) with a corresponding controller configuration, having pump electronics (23) with an operative connection to a display (25) for the presentation of at least one plant type that can be selected, at least one control mode that can be selected, at least one pump application that can be selected and/or at least one custom setting that can be selected or deselected, and with an operative connection to an input device (26, 27) for selecting and picking a plant type, a control mode, a pump application and/or a custom setting, **characterised by** the pump electronics (23) having a configuration device (10) with a configuration assistant (14) according to one of the claims 20 through 23 for the application-specific configuration of the rotary pump assembly (2).

25. Rotary pump assembly (2) according to claim 24, **characterised by** the display (25) and input device (26, 27) forming one structural unit with the pump electronics (23) or forming a structural unit that is independent of the pump electronics (23).

26. Arrangement consisting of a rotary pump assembly (2) with pump electronics (23) and a mobile hand-held device (30) for the configuration of the rotary pump assembly (2), in which the hand-held device (30) can be connected to the rotary pump assembly (2) over a data technology communication connection and the hand-held device (30) has a display (25) for the presentation of at least one plant type that can be selected, at least one control mode that can be selected, at least one pump application that can be selected and/or at least one custom setting that can be selected or deselected, and at least one input device (26, 27) for selecting and picking a plant type, a control mode, a pump application and/or a custom setting **characterised by** the hand-held device (30) having a configuration device (10) with a configuration assistant (14) according to one of the claims 20 through 23 for the selection of a predefined, application-specific controller configuration (12) and being set up to transfer the controller configuration (12) over the communication connection to the rotary pump assembly (2) and the pump electronics (23) being set up to set the transferred controller configuration (12).

## Revendications

1. Procédé de configuration pour un groupe motopompe centrifuge (2) à vitesse variable dans une installation hydraulique (1), utilisable de façon conforme pour une pluralité de types d'installation (A1-A5) différents et pouvant fonctionner, avec la configuration de régulateur adéquate, dans une pluralité de types de régulation (B1-B5) différents, **caractérisé en ce qu'**au moins un des types d'installation (A1-A5) et/ou un des types de régulation (B1-B5) d'un dispositif de configuration (10) est prédéfini par un opérateur, sachant que le dispositif de configuration (10) comprend une association prédéfinie enregistrée (17a), dans laquelle au moins un des types de régulation (B1-B5) est associé à chaque type d'installation (A1-A5), ainsi qu'une pluralité de configurations de régulateur (12) spécifiques à l'application, que les combinaisons type d'installation/type de régulation contenues dans l'association (17a) sont attribuées à l'une des configurations de régulateur (12), et que le dispositif de configuration (10) sélectionne la configuration de régulateur (17) attribuée en fonction de cette association (17a) et du type d'installation et/ou du type de régulation prédéfinis et la règle sur le groupe motopompe centrifuge (2).

2. Procédé de configuration selon la revendication 1, **caractérisé en ce qu'**un écran (25) affiche une représentation (31a) des types d'installation hydrauliques (A1-A5) et attend qu'un opérateur sélectionne un des types d'installation (A1-A5) et que conformément à l'association (17a) prédéfinie, en fonction du type d'installation sélectionné
- L'écran (25) affiche une représentation (32a) du ou des types de régulation attribués au type d'installation sélectionné, et attend la sélection par l'opérateur d'un ou des types de régulation affichés, sachant que cette sélection entraîne le réglage sur le groupe motopompe centrifuge (2) de la configuration de régulateur (12) associée à la combinaison du type de régulation sélectionné et du type d'installation sélectionné.
- Dans le cas de la sélection d'un des types d'installation (A1-A5) auquel n'est attribué qu'un des types de régulation (B1-B5), le système règle automatiquement sur le groupe motopompe centrifuge (2) la configuration de régulateur (12) associée à la combinaison de ce type de régulation et du type d'installation sélectionné.

3. Procédé de configuration selon la revendication 1, **caractérisé en ce qu'**un écran (25) affiche une représentation (31a) des types de régulation (B1-B5) et attend qu'un opérateur sélectionne un des types de régulation (A1-A5) affichés et que conformément à l'association (17a) prédéfinie, en fonction du type de régulation sélectionné
- L'écran (25) affiche une représentation du ou des types d'installation attribués au type de régulation sélectionné, et attend la sélection par l'opérateur d'un ou des types d'installation affichés, sachant que cette sélection entraîne le réglage sur le groupe motopompe centrifuge (2) de la configuration de régulateur (12) associée à la combinaison du type de régulation sélectionné et du type d'installation sélectionné.
- Dans le cas de la sélection d'un des types de régulation (B1-B5) auquel n'est attribué qu'un des types de régulation (A1-A5), le système règle automatiquement sur le groupe motopompe centrifuge (2) la configuration de régulateur (12) associée à la combinaison de ce type d'installation et du type de régulation sélectionné.

4. Procédé de configuration selon l'une des revendications précédentes, **caractérisé en ce que** chaque configuration de régulateur (12) comprend un algorithme de régulation (20) et un bloc de données (38) avec données de configuration de régulateur.

5. Procédé de configuration selon la revendication 2 ou 4, renvoyant à la revendication 2, **caractérisé en ce qu'**est affichée, en plus des installations hydrauliques sélectionnables (A1-A5), une liste des types de régulation (39) à sélectionner comprenant au moins une partie mais de préférence toutes les types de régulations disponibles, sachant que sélectionner la liste des types de régulation (39) entraîne l'écran des types de régulation qu'elle contient.

6. Procédé de configuration selon l'une des revendications 2 à 5, **caractérisé en ce que** la présentation (31a) des types d'installation (A1-A5) sur l'écran (25) est précédée d'une présentation (33a) d'applications de pompage (C1-C3) et que le dispositif attend la sélection par l'opérateur d'une de ces applications de pompage (C1-C3) et que, conformément à une association prédéfinie selon laquelle est attribuée à chacune des applications de pompage (C1-C3) au moins un des types d'installation (A1-A5), le dispositif n'affiche que le ou les types d'installation associés à l'application de pompage sélectionnée.

7. Procédé de configuration selon l'une des revendications 2 à 6, **caractérisé en ce que** la présentation (31a, 32a, 33a) des types d'installation (A1-A5) et/ou des types de régulation et/ou des applications de pompage (C1-C3) sur l'écran (25) est une liste, plus particulièrement chacune contenue dans sa propre fenêtre de dialogue (31, 32, 33).

8. Procédé de configuration selon l'une des revendications précédentes, en particulier selon la revendication 6, **caractérisé en ce que** le groupe motopompe centrifuge (2) dispose, en plus des types de régulation (B1-B5), d'une pluralité de réglages spéciaux (S1-S8), sachant que la disponibilité des réglages spéciaux et/ou l'activation d'au moins un des réglages spéciaux (S1-S8) sont limitées en fonction du type d'installation donné et/ou d'une application de pompage sélectionnée.

9. Procédé de configuration selon l'une des revendications 2 à 8, **caractérisé en ce qu'**au moins un réglage spécial activable parmi une pluralité de réglages spéciaux possibles (S1-S8) est attribué aux combinaisons d'un type d'installation et d'un type de régulation.

10. Procédé de configuration selon la revendication 9, **caractérisé en ce qu'**un, plusieurs ou tous les réglages spéciaux associés sont affichés dans l'écran (25) dès que la configuration de régulateur associée (12) est définie.

11. Procédé de configuration selon la revendication 9 ou 10, **caractérisé en ce que** l'activation d'un des réglages spéciaux (S1-S8) modifie la configuration de régulateur (12) ou active une fonction spéciale en complément du type de régulation sélectionné.

12. Procédé de configuration selon l'une des revendications 9 à 11, **caractérisé en ce qu'**au moins un des réglages spéciaux attribués est directement activé au moment de la définition de la configuration de régulateur (12) associée.

13. Procédé de configuration selon la revendication 12, **caractérisé en ce qu'**un réglage spécial directement activé est verrouillé contre toute désactivation, tout particulièrement n'est pas affiché.

14. Procédé de configuration selon l'une des revendications 2 à 13, **caractérisé en ce que** le dispositif de configuration (10) détecte de façon autonome lorsqu'un capteur est raccordé, tout particulièrement le type du capteur et/ou le nombre de capteurs raccordés et que la détection d'un capteur entraîne la présentation pour sélection dans l'écran (25) soit seulement, soit en complément, du ou des types de régulation requérant un capteur raccordé, plus particulièrement le capteur raccordé, ou requérant un nombre de capteurs correspondant au nombre de capteurs raccordés.

15. Procédé de configuration selon l'une des revendications 2 à 14, **caractérisé en ce que** le dispositif de configuration (10) détecte de façon autonome si un capteur est raccordé, en particulier le type du capteur et/ou le nombre de capteurs raccordés, et que lors de la sélection d'un des types de régulation, requérant au moins un capteur raccordé, un type de capteur particulier ou un nombre de capteurs particulier, une erreur et/ou un appel à action sont émis lorsqu'aucun capteur, un capteur en moins ou un type de capteur autre que celui requis est raccordé.

16. Procédé de configuration selon l'une des revendications 2 à 15, **caractérisé en ce que** le dispositif de configuration (10) détecte de façon autonome que le groupe motopompe centrifuge (2) est relié, plus particulièrement mis en réseau avec au moins un autre groupe motopompe centrifuge (2') et que suite à la détection de la liaison ou de la mise en réseau avec au moins un autre groupe motopompe centrifuge (2') entraîne la présentation pour sélection dans l'écran (25) soit seulement, soit en complément, du ou des types de régulation requérant la liaison ou la mise en réseau avec au moins un autre groupe motopompe centrifuge (2').

17. Procédé de configuration selon l'une des revendications 2 à 16, **caractérisé en ce que** le dispositif de configuration (10) détecte de façon autonome que le groupe motopompe centrifuge (2) est relié, plus particulièrement mis en réseau avec au moins un autre groupe motopompe centrifuge (2') et que lors de la sélection d'un des types de régulation, requérant la liaison ou la mise en réseau avec au moins un autre groupe motopompe centrifuge (2'), une erreur et/ou un appel à action sont émis si aucun autre groupe motopompe centrifuge (2') n'est relié au groupe motopompe centrifuge (2).

18. Procédé de configuration selon la revendication 2 ou une des revendications 4 à 17, renvoyant à la revendication 2, **caractérisé en ce que** lorsqu'un préréglage implique que plusieurs types de régulation soient attribués à un type d'installation, un de ces types de régulation est proposé comme type de régulation privilégié et/ou directement réglé.

19. Procédé de configuration selon l'une des revendications 2 à 18, **caractérisé en ce qu'**un texte d'explication spécifique (18) est affiché sur l'écran (25) pour chaque option de sélection.

20. Assistant de configuration graphique logiciel (14) de réglage d'un types de régulation pour un groupe motopompe centrifuge à vitesse de rotation variable (2), utilisable de façon conforme pour une pluralité de types d'installation (A1-A5) différents et pouvant fonctionner, avec la configuration de régulateur adéquate, dans une pluralité de types de régulation (B1-B5) différents, avec moyens de programme (14a) pour le traitement lors de l'exploitation dans un processeur, **caractérisé en ce qu'**il comprend une pluralité de configurations de régulateur (12) prédéfinies et spécifiques à des applications et que dans les moyens de programme (14a) est attribué à chacun des types d'installation (A1-A5) au moins un type de régulation (B1-B5) et que chaque combinaison d'un type d'installation (A1-A5) et de son type de régulation (B1-B5) attribué est associée avec une des configurations de régulateur (12) prédéfinies et spécifiques à des applications, sachant que les configurations de régulateur (12) sont enregistrées dans au moins une bases de données (11) pouvant être sollicitée par les moyens de programme (14a) et que les moyens de programme sont configurés pour exécuter le procédé selon l'une des revendications 1 à 19.

21. Assistant de configuration (14) selon la revendication 20, **caractérisé en ce que** dans les moyens de programme (14a) chacun des types d'installation (A1-A5) est attribué à une parmi plusieurs applications de pompage (C1-C3) et que les moyens de programme (14a) sont configurés pour afficher dans l'écran (25) une présentation (15a) des applications de pompage (C1-C3), attendre la sélection d'une des applications de pompages affichées (C1-C3) pour n'afficher ensuite que les types d'installation (A1-A5) attribués à l'application de pompage sélectionnée.

22. Assistant de configuration (14) selon l'une des revendications 20 ou 21, **caractérisé en ce qu'**il comprend une pluralité de réglages spéciaux activables (S1-S8) et qu'au sein des moyens de programme (14a) ou des configurations de régulateur (12), au moins un des réglages spéciaux est attribué aux combinaisons d'un type d'installation et d'un type de régulation.

23. Assistant de configuration (14) selon l'une des revendications 20 à 22, **caractérisé en ce qu'**il comprend une pluralité de textes d'explication spécifiques (18) pouvant être affichés sur l'écran (25) lorsque l'opérateur a sélectionné l'une des options de sélection affichées.

24. Groupe motopompe centrifuge à vitesse de rotation variable (2), utilisable de façon conforme pour une pluralité de types d'installation (A1-A5) différents et pouvant fonctionner, avec la configuration de régulateur adéquate, dans une pluralité de types de régulation (B1-B5) différents, avec une électronique de pompe (23) en liaison fonctionnelle avec un écran (25) destiné à afficher au moins un type d'installation sélectionnable, au moins un type de régulation sélectionnable, au moins une application de pompage sélectionnable et/ou au moins un réglage spécial sélectionnable ou déselectionnable et avec au moins un moyen de saisie (26, 27) destiné à sélectionner et saisir un ensemble composé d'un type d'installation, d'un type de régulation, d'une application de pompage et/ou d'un réglage spécial, **caractérisé en ce que** l'électronique de pompe (23) présente un dispositif de configuration (10) avec un assistant de configuration (14) selon l'une des revendications 20 à 23 destiné à la configuration spécifique à l'application du groupe motopompe centrifuge (2).

25. Groupe motopompe centrifuge (2) selon la revendication 24, **caractérisé en ce que** l'écran (25) et le moyen de saisie (26, 27) forment une unité de construction avec l'électronique de pompe (23) ou une unité de construction indépendante de l'électronique de pompe (23).

26. Dispositif constitué d'un groupe motopompe centrifuge (2) avec une électronique de pompe (23) et un appareil portable mobile (30) de configuration du groupe motopompe centrifuge (2), sachant que l'appareil portable (30) peut être relié au groupe motopompe centrifuge (2) par une liaison de communication de données et que l'appareil portable (30) présente un écran (25) destiné à afficher au moins un type d'installation sélectionnable, au moins un type de régulation sélectionnable, au moins une application de pompage sélectionnable et/ou au moins un réglage spécial sélectionnable ou déselectionnable et au moins un moyen de saisie (26, 27) destiné à sélectionner et saisir un ensemble composé d'un type d'installation, d'un type de régulation, d'une application de pompage et/ou d'un réglage spécial, **caractérisé en ce que** l'appareil portable (30) est un dispositif de configuration (10) avec un assistant de configuration (14) selon l'une des revendications 20 à 23 destiné à la sélection d'une configuration de régulateur (12) prédéfinie et spécifique à l'application et configuré pour transmettre par liaison de communication la configuration de régulateur (12) au groupe motopompe centrifuge (2) et que l'électronique de pompe (23) est configurée pour régler la configuration de régulateur (12) transmise.
